# EUROPEAN PATENT APPLICATION

(11) **EP 4 745 579 A1**
(43) Date of publication of application: **20.05.2026**
(21) Application number: 24838276.4
(22) Date of filing: 31.01.2024
(51) Int. Cl.: G01N 35/00, G01N 35/02

(54) **SAMPLE TREATMENT DEVICE AND SAMPLE ANALYSIS SYSTEM**

(30) Priority: 10.07.2023 WO PCT/CN2023/106644
(71) Applicant: Shenzhen Mindray Bio-Medical Electronics Co., Ltd., Shenzhen, Guangdong 518057 (CN)
(72) Inventor: LI, Xuerong, Shenzhen, Guangdong 518057 (CN)
(74) Representative: KIPA AB
(86) International application number: PCT/CN2024/075083
(87) International publication number: WO 2025/011013

(57) **Abstract**

A sample treatment device (100) and a sample analysis system (10), relating to the field of in vitro diagnostic apparatuses. The sample treatment device (100) comprises a sample loading mechanism (110), a centrifuge device (120), an identification assembly (130), a transfer device (140), and a controller. The sample loading mechanism (110) is used for sample loading. The centrifuge device (120) is used for performing a centrifugal operation on a sample. The transfer device (140) is at least used for transferring the sample from the sample loading mechanism (110) to the centrifuge device (120). The identification assembly (130) is at least used for performing quality identification on the sample. The controller is configured to: control the centrifuge device (120) to perform a first centrifugal operation on the sample at a first rotating speed; control the identification assembly (130) to perform quality identification on the sample undergone the first centrifugal operation; on the basis of feedback information from the identification assembly (130), determine whether the sample undergone the first centrifugal operation is abnormal; and if it is determined that the sample is abnormal, control the centrifuge device (120) to perform a second centrifugal operation at a second rotating speed on the abnormal sample undergone the first centrifugal operation, wherein the second rotating speed is greater than the first rotating speed. The device achieves automatic online treatment of abnormal samples.

## Description

### TECHNICAL FIELD

The present disclosure relates to the field of vitro diagnostic devices, and in particular to a sample processing device and a sample analysis system including the sample processing device.

### BACKGROUND

In the related art, a sample analysis system is provided, in which a centrifugation mechanism is provided in a pretreatment device for performing a centrifugation operation on a sample, so as to meet the requirement that some samples need to be centrifuged before testing. The centrifugation mechanism in the sample analysis system operates at a moderate-to-low rotational speed and has a large capacity, for example, the rotational speed is 4000 rpm or less, and a capacity in a single operation is about 120 sample containers or 80 sample containers. The configuration manner for the centrifugation mechanism is relatively rigid, either configuring a uniform rotational speed and operating duration, or configuring different rotational speeds and durations for different items, yet only one parameter configuration can be used at an operating moment. The parameter configurations are typically predefined.

In actual clinical practices, the following issues have been identified with the aforementioned sample analysis system.
(1) Some samples, after centrifugation, are determined to be abnormal samples through quality identification. For example, many fat granules are present in a supernatant (that is, such sample is a lipemic sample), or clots are present in the supernatant and fibrin strands are present in the sample. These abnormal samples cannot be directly transferred to the sample analyzer for testing, this is because these abnormal samples may interfere with results of some sample testing items. At present, the common manner to process these abnormal samples includes that: a medical staff may retrieve these abnormal samples and manually carry them to an offline centrifuge for secondary centrifugation, and then return the samples to the sample analysis system for testing after most of the fat granules or clots in the supernatant are precipitated. This processing approach has drawbacks such as troublesome processing, long processing cycle, and consuming much time and effort of the medical staff.
(2) The centrifugation mechanism in the sample analysis system operates under a high workload, typically required to operate in batches at full capacity. For emergency samples, there is often a significant delay before these samples are inserted into the workflow, which prolongs the time required to issue test reports for the emergency samples. At present, the common processing manner to process the emergency samples includes that: the medical staff manually carry the emergency samples to the offline centrifuge for centrifugation in advance, and then manually place them to the sample analysis system for testing. This processing approach has drawbacks such as troublesome processing, long processing cycle, and consuming much time and effort of the medical staff.

### SUMMARY

A first objective of the present disclosure is to provide a sample processing device, which aims to solve the technical problem in the related art of troublesome processing, long processing cycle, and high consumption of the time and effort of the medical staff caused by the need to manually transfer abnormal samples to an offline centrifuge and then place them into the sample processing device to reload the abnormal samples.

In order to achieve the above objective, there is provided a sample processing device in a solution of the present disclosure. The sample processing device includes: a sample loading mechanism, a centrifugation device, a transfer device, an identification component and a controller.

The sample loading mechanism is configured to receive a sample container containing a sample in order to load the sample.

The centrifugation device is configured to perform a centrifugation operation on the sample.

The transfer device is configured to at least transfer the sample from the sample loading mechanism to the centrifugation device.

The identification component is configured to at least perform quality identification on the sample after the centrifugation operation.

The controller is configured to: control the centrifugation device to perform a first centrifugation operation on the sample at a first rotational speed, control the identification component to perform the quality identification on the sample after the first centrifugation operation, determine, after the first centrifugation operation, whether the sample is abnormal based on feedback information from the identification component, and if the sample is determined to be abnormal, control the centrifugation device to perform a second centrifugation operation on the sample, which is abnormal after the first centrifugation operation, at a second rotational speed.

The second rotational speed is greater than the first rotational speed.

As an implementation, the centrifugation device includes a first centrifugation mechanism and a second centrifugation mechanism, the first centrifugation mechanism and the second centrifugation mechanism are capable of operating independently.

The controller is further configured to: control the transfer device to transfer the sample from the sample loading mechanism to the first centrifugation mechanism, control the first centrifugation mechanism to perform the first centrifugation operation on the sample at the first rotational speed, if, after the first centrifugation operation, the sample is determined to be abnormal based on the feedback information from the identification component, control the transfer device to transfer the sample, which is abnormal after the first centrifugation operation, to the second centrifugation mechanism, and control the second centrifugation mechanism to perform the second centrifugation operation on the sample, which is abnormal after the first centrifugation operation, at the second rotational speed.

As an implementation, a capacity of the first centrifugation mechanism is greater than a capacity of the second centrifugation mechanism.

The capacity of the first centrifugation mechanism is a maximum number of samples that the first centrifugation mechanism is capable of holding in a single centrifugation operation, and the capacity of the second centrifugation mechanism is a maximum number of samples that the second centrifugation mechanism is capable of holding in a single centrifugation operation.

As an implementation, the sample loading mechanism configured to receive the sample container containing the sample in order to load the sample includes that: the sample loading mechanism is configured to receive a first sample container containing a first sample in order to load the first sample, and receive a second sample container containing a second sample in order to load the second sample.

The centrifugation device configured to perform the centrifugation operation on the sample includes that: the centrifugation device is configured to perform the centrifugation operation on the first sample and perform the centrifugation operation on the second sample.

The identification component configured to perform the quality identification on the sample after the centrifugation operation includes that: the identification component is configured to perform the quality identification on the first sample after the centrifugation operation, and perform the quality identification on the second sample after the centrifugation operation.

The transfer device configured to at least transfer the sample from the sample loading mechanism to the centrifugation device includes that: the transfer device is configured to transfer the first sample from the sample loading mechanism to the centrifugation device and transfer the second sample from the sample loading mechanism to the centrifugation device.

The operations of controlling the transfer device to transfer the sample to the first centrifugation mechanism, controlling the first centrifugation mechanism to perform the first centrifugation operation on the sample at the first rotational speed, and if, after the first centrifugation operation, the sample is determined to be abnormal based on the feedback information from the identification component, controlling the transfer device to transfer the sample, which is abnormal after the first centrifugation operation, to the second centrifugation mechanism, and controlling the second centrifugation mechanism to perform the second centrifugation operation on the sample, which is abnormal after the first centrifugation operation, at the second rotational speed include: controlling the transfer device to transfer the first sample from the sample loading mechanism to the first centrifugation mechanism, controlling the first centrifugation mechanism to perform the first centrifugation operation on the first sample at the first rotational speed, and if, after the first centrifugation operation, the first sample is determined to be abnormal based on the feedback information from the identification component, controlling the transfer device to transfer the first sample, which is abnormal after the first centrifugation operation, to the second centrifugation mechanism, and controlling the second centrifugation mechanism to perform the second centrifugation operation on the first sample, which is abnormal after the first centrifugation operation, at the second rotational speed.

The controller is further configured to: control the transfer device to transfer the second sample from the sample loading mechanism to the second centrifugation mechanism, and control the second centrifugation mechanism to perform the centrifugation operation on the second sample.

A priority for processing the second sample is higher than a priority for processing the first sample.

As an implementation, the operations of controlling the transfer device to transfer the second sample from the sample loading mechanism to the second centrifugation mechanism, and controlling the second centrifugation mechanism to perform the centrifugation operation on the second sample include: controlling the transfer device to transfer the second sample from the sample loading mechanism to the second centrifugation mechanism, controlling the second centrifugation mechanism to perform the first centrifugation operation on the second sample at the first rotational speed, controlling the identification component to perform the quality identification on the second sample after the first centrifugation operation, and if, after the first centrifugation operation, the second sample is determined to be abnormal based on the feedback information from the identification component, controlling the second centrifugation mechanism to perform the second centrifugation operation on the second sample, which is abnormal after the first centrifugation operation, at the second rotational speed.

As an implementation, the centrifugation device further includes a third centrifugation mechanism. The first centrifugation mechanism, the second centrifugation mechanism and the third centrifugation mechanism are capable of operating independently.

The sample loading mechanism configured to receive the sample container containing the sample in order to load the sample includes that: the sample loading mechanism is configured to receive a first sample container containing a first sample in order to load the first sample, and receive a second sample container containing a second sample in order to load the second sample.

The centrifugation device configured to perform the centrifugation operation on the sample includes that: the centrifugation device is configured to perform the centrifugation operation on the first sample and perform the centrifugation operation on the second sample.

The identification component configured to perform the quality identification on the sample after the centrifugation operation includes that: the identification component is configured to perform the quality identification on the first sample after the centrifugation operation, and perform the quality identification on the second sample after the centrifugation operation.

The transfer device configured to at least transfer the sample from the sample loading mechanism to the centrifugation device includes that: the transfer device is configured to transfer the first sample from the sample loading mechanism to the centrifugation device and transfer the second sample from the sample loading mechanism to the centrifugation device.

The operations of controlling the transfer device to transfer the sample to the first centrifugation mechanism, controlling the first centrifugation mechanism to perform the first centrifugation operation on the sample at the first rotational speed, and if, after the first centrifugation operation, the sample is determined to be abnormal based on the feedback information from the identification component, controlling the transfer device to transfer the sample, which is abnormal after the first centrifugation operation, to the second centrifugation mechanism, and controlling the second centrifugation mechanism to perform the second centrifugation operation on the sample, which is abnormal after the first centrifugation operation, at the second rotational speed include: controlling the transfer device to transfer the first sample to the first centrifugation mechanism, controlling the first centrifugation mechanism to perform the first centrifugation operation on the first sample at the first rotational speed, and if, after the first centrifugation operation, the first sample is determined to be abnormal based on the feedback information from the identification component, controlling the transfer device to transfer the first sample, which is abnormal after the first centrifugation operation, to the second centrifugation mechanism, and controlling the second centrifugation mechanism to perform the second centrifugation operation on the first sample, which is abnormal after the first centrifugation operation, at the second rotational speed.

The controller is further configured to: control the transfer device to transfer the second sample from the sample loading mechanism to the third centrifugation mechanism, and control the third centrifugation mechanism to perform the centrifugation operation on the second sample.

A priority for processing the second sample is higher than a priority for processing the first sample.

As an implementation, the operations of controlling the transfer device to transfer the second sample from the sample loading mechanism to the third centrifugation mechanism, and controlling the third centrifugation mechanism to perform the centrifugation operation on the second sample include: controlling the transfer device to transfer the second sample from the sample loading mechanism to the third centrifugation mechanism, and controlling the third centrifugation mechanism to perform the first centrifugation operation on the second sample at the first rotational speed. The controller is further configured to: control the identification component to perform the quality identification on the second sample after the first centrifugation operation, and if, after the first centrifugation operation, the second sample is determined to be abnormal based on the feedback information from the identification component, control the transfer device to transfer the second sample, which is abnormal after the first centrifugation operation, to the second centrifugation mechanism, and control the second centrifugation mechanism to perform the second centrifugation operation on the second sample, which is abnormal after the first centrifugation operation, at the second rotational speed.

Alternatively, the operations of controlling the transfer device to transfer the second sample from the sample loading mechanism to the third centrifugation mechanism, and controlling the third centrifugation mechanism to perform the centrifugation operation on the second sample include: controlling the transfer device to transfer the second sample from the sample loading mechanism to the third centrifugation mechanism, controlling the third centrifugation mechanism to perform the first centrifugation operation on the second sample at the first rotational speed, controlling the identification component to perform the quality identification on the second sample after the first centrifugation operation, and if, after the first centrifugation operation, the second sample is determined to be abnormal based on the feedback information from the identification component, controlling the third centrifugation mechanism to perform the second centrifugation operation on the second sample, which is abnormal after the first centrifugation operation, at the second rotational speed.

As an implementation, the second rotational speed is greater than or equal to 8000 rpm.

As an implementation, the second rotational speed is greater than or equal to 10,000 rpm.

As an implementation, the first rotational speed is less than or equal to 5000 rpm.

As an implementation, the first rotational speed is greater than or equal to 2000 rpm.

As an implementation, the transfer device includes a first conveying track, a first transfer mechanism and a second transfer mechanism. The first conveying track is configured to transfer, under control of the controller, the sample container outputted from the sample loading mechanism to the first centrifugation mechanism or the second centrifugation mechanism.

The first transfer mechanism is configured to transfer, under control of the controller, the sample container between the first conveying track and the first centrifugation mechanism.

The second transfer mechanism is configured to transfer, under control of the controller, the sample container between the first conveying track and the second centrifugation mechanism.

The first transfer mechanism and the second transfer mechanism are two mechanisms capable of operating independently, or the first transfer mechanism and the second transfer mechanism are a same mechanism.

As an implementation, the transfer device includes a pipetting mechanism configured to aspirate and dispense the sample.

The controller is further configured to: control the centrifugation device to perform the first centrifugation operation on the sample at the first rotational speed, control the identification component to perform the quality identification on the sample after the first centrifugation operation, determine whether the sample is abnormal based on the feedback information from the identification component, and if the sample is determined to be abnormal, control the pipetting mechanism to aspirate a supernatant from the sample after the first centrifugation operation and dispense the supernatant into an empty sample container, and control the centrifugation device to perform the second centrifugation operation on the supernatant dispensed by the pipetting mechanism at the second rotational speed.

As an implementation, the sample loading mechanism configured to receive the sample container containing the sample in order to load the sample includes that: the sample loading mechanism is configured to receive a sample container containing an uncentrifuged sample in order to load the uncentrifuged sample and receive a sample container containing a centrifuged sample in order to load the centrifuged sample.

The centrifugation device configured to perform the centrifugation operation on the sample includes that: the centrifugation device is configured to at least perform the centrifugation operation on the uncentrifuged sample.

The transfer device configured to at least transfer the sample from the sample loading mechanism to the centrifugation device includes that: the transfer device is configured to transfer the uncentrifuged sample from the sample loading mechanism to the centrifugation device.

The operations of controlling the centrifugation device to perform the first centrifugation operation on the sample at the first rotational speed, controlling the identification component to perform the quality identification on the sample after the first centrifugation operation, determining, after the first centrifugation operation, whether the sample is abnormal based on the feedback information from the identification component, and if the sample is determined to be abnormal, controlling the centrifugation device to perform the second centrifugation operation on the sample, which is abnormal after the first centrifugation operation, at the second rotational speed include: controlling the transfer device to transfer the uncentrifuged sample from the sample loading mechanism to the centrifugation device, controlling the centrifugation device to perform the first centrifugation operation on the uncentrifuged sample at the first rotational speed, controlling the identification component to perform the quality identification on the sample after the first centrifugation operation, determining, after the first centrifugation operation, whether the sample is abnormal based on the feedback information from the identification component, and if the sample is determined to be abnormal, controlling the centrifugation device to perform the second centrifugation operation on the sample, which is abnormal after the first centrifugation operation, at the second rotational speed.

The controller is further configured to: determine whether the centrifuged sample is abnormal based on the feedback information from the identification component, and when the centrifuged sample is determined to be abnormal, control the transfer device to transfer the centrifuged sample to the centrifugation device, and control the centrifugation device to perform the second centrifugation operation on the centrifuged sample at the second rotational speed.

As an implementation, the identification component includes a first identification unit and a second identification unit. The first identification unit is configured to perform the quality identification on the sample after the centrifugation operation, and the second identification unit is configured to identify the sample container outputted from the sample loading mechanism.

The controller is further configured to: determine, based on feedback information from the second identification unit, whether the sample in the sample container outputted from the sample loading mechanism is an uncentrifuged sample or a centrifuged sample and whether the centrifuged sample is abnormal.

The operation of determining whether the centrifuged sample is abnormal based on the feedback information from the identification component includes: determining whether the centrifuged sample is abnormal based on the feedback information from the second identification unit.

The operation of determining, after the first centrifugation operation, whether the sample is abnormal based on the feedback information from the identification component includes: determining, after the first centrifugation operation, whether the sample is abnormal based on feedback information from the first identification unit.

As an implementation, the sample processing device further includes a human-machine interaction device. The human-machine interaction device is configured to at least allow an operator to set a rotational speed for centrifugation and/or a centrifugation duration for the centrifugation device.

As an implementation, the sample being abnormal includes at least one of: the sample being a lipemic sample, presence of clot(s) in the sample, and presence of fibrin strand(s) in the sample.

As an implementation, the sample processing device further includes a mixing mechanism. The controller is further configured to: control the mixing mechanism to mix the sample after the sample is determined to be abnormal and before controlling the centrifugation device to perform the second centrifugation operation on the sample at the second rotational speed.

As an implementation, the controller is further configured to: determine, based on an abnormal type of the sample, whether to control the mixing mechanism to mix the sample after the sample is determined to be abnormal and before controlling the centrifugation device to perform the second centrifugation operation on the sample at the second rotational speed.

As an implementation, the controller is further configured to: when the abnormal type of the sample is the presence of the fibrin strand(s) in the sample or the presence of the clot(s) in the sample, control the mixing mechanism to mix the sample firstly, and then control the centrifugation device to perform the second centrifugation operation on the sample at the second rotational speed.

A second objective of the present disclosure is to provide a sample processing device. The sample processing device includes: a sample loading mechanism, a centrifugation device, an identification component, a transfer device and a controller.

The sample loading mechanism is configured to receive a sample container containing a sample in order to load the sample.

The centrifugation device is configured to perform a centrifugation operation on the sample.

The transfer device is configured to at least transfer the sample from the sample loading mechanism to the centrifugation device.

The identification component is configured to at least perform quality identification on the sample after the centrifugation operation.

The transfer device is configured to at least transfer the sample from the sample loading mechanism to the centrifugation device.

The controller is configured to: control the identification component to perform the quality identification on the sample after the centrifugation operation, determine, after the centrifugation operation, whether the sample is abnormal based on feedback information from the identification component, and if the sample is determined to be abnormal, control the centrifugation device to perform the centrifugation operation on the sample at a second rotational speed.

The second rotational speed is greater than or equal to 8000 rpm.

As an implementation, the second rotational speed is greater than or equal to 10,000 rpm.

As an implementation, the sample being abnormal includes at least one of: the sample being a lipemic sample, presence of clot(s) in the sample, and presence of fibrin strand(s) in the sample.

As an implementation, the sample loading mechanism configured to receive the sample container containing the sample in order to load the sample includes that: the sample loading mechanism is configured to receive an uncentrifuged sample container containing an uncentrifuged sample in order to load the uncentrifuged sample and receive a centrifuged sample container containing a centrifuged sample in order to load the centrifuged sample.

The centrifugation device configured to perform the centrifugation operation on the sample includes that: the centrifugation device is configured to at least perform the centrifugation operation on the uncentrifuged sample.

The identification component configured to perform the quality identification on the sample after the centrifugation operation includes that: the identification component is configured to perform the quality identification on the uncentrifuged sample after the centrifugation operation, and perform the quality identification on the centrifuged sample after the centrifugation operation.

The transfer device configured to at least transfer the sample from the sample loading mechanism to the centrifugation device includes that: the transfer device is configured to at least transfer the uncentrifuged sample from the sample loading mechanism to the centrifugation device.

The operations of controlling the identification component to perform the quality identification on the sample after the centrifugation operation, determining, after the centrifugation operation, whether the sample is abnormal based on the feedback information from the identification component, and if the sample is determined to be abnormal, controlling the centrifugation device to perform the centrifugation operation on the sample at the second rotational speed include:
controlling the transfer device to transfer the uncentrifuged sample from the sample loading mechanism to the centrifugation device, controlling the centrifugation device to perform a first centrifugation operation on the uncentrifuged sample at a first rotational speed, controlling the identification component to perform the quality identification on the sample after the first centrifugation operation, determining, after the first centrifugation operation, whether the sample is abnormal based on the feedback information from the identification component, and if the sample is determined to be abnormal, controlling the centrifugation device to perform a second centrifugation operation on the sample, which is abnormal after the first centrifugation operation, at the second rotational speed; and
determining whether the centrifuged sample is abnormal based on the feedback information from the identification component, and when the centrifuged sample is determined to be abnormal, controlling the transfer device to transfer the centrifuged sample to the centrifugation device, and controlling the centrifugation device to perform the second centrifugation operation on the centrifuged sample at the second rotational speed.

The first rotational speed is greater than or equal to 2000 rpm and less than or equal to 5000 rpm.

As an implementation, the identification component includes a first identification unit and a second identification unit. The first identification unit is configured to perform the quality identification on the sample after the centrifugation operation, and the second identification unit is configured to identify the sample container outputted from the sample loading mechanism.

The controller is further configured to: determine, based on feedback information from the second identification unit, whether the sample in the sample container outputted from the sample loading mechanism is an uncentrifuged sample or a centrifuged sample and whether the centrifuged sample is abnormal.

The operation of determining whether the centrifuged sample is abnormal based on the feedback information from the identification component includes: determining whether the centrifuged sample is abnormal based on the feedback information from the second identification unit.

The operation of determining, after the first centrifugation operation, whether the sample is abnormal based on the feedback information from the identification component includes: determining, after the first centrifugation operation performed by the centrifugation device, whether the sample is abnormal based on feedback information from the first identification unit.

A third objective of the present disclosure is to provide a sample processing device. The sample processing device includes: a sample loading mechanism, a centrifugation device, a transfer device and a controller.

The sample loading mechanism is configured to receive a first sample container containing a first sample in order to load the first sample, and receive a second sample container containing a second sample in order to load the second sample.

The centrifugation device includes a first centrifugation mechanism configured to perform a centrifugation operation on the first sample and a second centrifugation mechanism configured to perform a centrifugation operation on the second sample. A capacity of the first centrifugation mechanism is greater than a capacity of the second centrifugation mechanism, and the first centrifugation mechanism and the second centrifugation mechanism are capable of operating independently. The capacity of the first centrifugation mechanism is a maximum number of samples that the first centrifugation mechanism is capable of holding in a single centrifugation operation, and the capacity of the second centrifugation mechanism is a maximum number of samples that the second centrifugation mechanism is capable of holding in a single centrifugation operation.

The transfer device is configured to at least transfer the first sample from the sample loading mechanism to the first centrifugation mechanism and transfer the second sample from the sample loading mechanism to the second centrifugation mechanism.

The controller is configured to: control the transfer device to transfer the first sample from the sample loading mechanism to the first centrifugation mechanism, control the first centrifugation mechanism to perform the centrifugation operation on the first sample; and control the transfer device to transfer the second sample from the sample loading mechanism to the second centrifugation mechanism, and control the second centrifugation mechanism to perform the centrifugation operation on the second sample.

A priority for processing the second sample is higher than a priority for processing the first sample.

As an implementation, the second centrifugation mechanism is capable of performing the centrifugation operation on the second sample at a first rotational speed and a second rotational speed.

The first rotational speed is greater than or equal to 2000 rpm and less than or equal to 5000 rpm, and the second rotational speed is greater than or equal to 8000 rpm.

As an implementation, the sample processing device further includes an identification component. The identification component is configured to at least perform quality identification on the second sample after the centrifugation operation.

The operation of controlling the second centrifugation mechanism to perform the centrifugation operation on the second sample includes: controlling the second centrifugation mechanism to perform a first centrifugation operation on the second sample at the first rotational speed, controlling the identification component to perform the quality identification on the second sample after the first centrifugation operation, and if the second sample is determined to be abnormal based on feedback information from the identification component, controlling the second centrifugation mechanism to perform a second centrifugation operation on the second sample, which is abnormal after the first centrifugation operation, at the second rotational speed.

A fourth objective of the present disclosure is to provide a sample processing device. The sample processing device includes: a sample loading mechanism, a centrifugation device, a transfer device, an identification component and a controller.

The sample loading mechanism is configured to receive a sample container containing a sample in order to load the sample.

The centrifugation device includes a first centrifugation mechanism and a second centrifugation mechanism. The first centrifugation mechanism and the second centrifugation mechanism are configured to perform centrifugation operations on the sample, respectively, and the second centrifugation mechanism is capable of operating independently relative to the first centrifugation mechanism.

The transfer device is configured to at least transfer the sample from the sample loading mechanism to the first centrifugation mechanism or the second centrifugation mechanism.

The identification component is configured to at least perform quality identification on the sample after the centrifugation operation.

The controller is configured to: control the transfer device to transfer the sample from the sample loading mechanism to the first centrifugation mechanism, control the first centrifugation mechanism to perform a first centrifugation operation on the sample, control the identification component to perform the quality identification on the sample after the first centrifugation operation, determine, after the first centrifugation operation, whether the sample is abnormal based on feedback information from the identification component, and if the sample is determined to be abnormal, control the transfer device to transfer the sample, which is abnormal after the first centrifugation operation, to the second centrifugation mechanism, and control the second centrifugation mechanism to perform a second centrifugation operation on the sample which is abnormal after the first centrifugation operation.

As an implementation, a capacity of the first centrifugation mechanism is greater than a capacity of the second centrifugation mechanism. The capacity of the first centrifugation mechanism is a maximum number of samples that the first centrifugation mechanism is capable of holding in a single centrifugation operation, and the capacity of the second centrifugation mechanism is a maximum number of samples that the second centrifugation mechanism is capable of holding in a single centrifugation operation.

As an implementation, the operation of controlling the second centrifugation mechanism to perform the second centrifugation operation on the sample, which is abnormal after the first centrifugation operation, includes: controlling the centrifugation device to perform the second centrifugation operation on the sample, which is abnormal after the first centrifugation operation, at a second rotational speed.

The second rotational speed is greater than or equal to 8000 rpm.

As an implementation, the sample being abnormal includes at least one of: the sample being a lipemic sample, presence of clot(s) in the sample, and presence of fibrin strand(s) in the sample.

A fifth objective of the present disclosure is to provide a sample processing system. The sample processing system includes: an aforementioned sample processing device, at least one sample analyzer and a transport device.

The at least one sample analyzer is configured to perform at least one sample testing item on a sample.

The transport device is configured to transport the sample from the sample processing device to the sample analyzer for aspiration of the sample by the sample analyzer.

According to the sample processing device provided in the first objective and the sample analysis system provided in the fifth objective of the present disclosure, the centrifugation device is configured to perform the centrifugation on the sample at the first rotational speed and the second rotational speed, respectively, and the controller is configured to: control the centrifugation device to perform the first centrifugation operation on the sample at the first rotational speed firstly, and then, if, after the first centrifugation operation, the sample is determined to be abnormal based on the feedback information from the identification component through the quality identification, control the centrifugation device to perform the second centrifugation operation on the sample, which is abnormal after the first centrifugation operation, at the second rotational speed greater than the first rotational speed. Therefore, the automatic online processing for the abnormal samples can be performed through a higher rotational speed, and it is not required for the medical staff to manually carry the abnormal samples to the offline centrifuge for centrifugation. Accordingly, the process of handling abnormal samples can be effectively simplified, the time for processing the abnormal samples can be reduced, the time and effort of the medical staff consumed by abnormal samples can be greatly reduced, thereby reducing disruption to the work of medical staff by the abnormal samples.

According to the sample processing device provided in the second objective and the sample analysis system provided in the fifth objective of the present disclosure, the centrifugation device is configured to perform the centrifugation on the sample at the second rotational speed that is greater or equal to 8000 rpm, and the controller is configured to: control the centrifugation device to perform the centrifugation operation on the abnormal sample at the second rotational speed that is greater or equal to 8000 rpm, after the sample is determined to be abnormal based on the feedback information from the identification component through the quality identification. Therefore, the automatic online processing for the abnormal samples can be performed through a higher rotational speed, and it is not required for the medical staff to manually carry the abnormal samples to the offline centrifuge for centrifugation. Accordingly, the process of handling abnormal samples can be effectively simplified, the time for processing the abnormal samples can be reduced, the time and effort of the medical staff consumed by abnormal samples can be greatly reduced, thereby reducing disruption to the work of medical staff by the abnormal samples.

According to the sample processing device provided in the third objective and the sample analysis system provided in the fifth objective of the present disclosure, the centrifugation device includes a first centrifugation mechanism having a large capacity and a second centrifugation mechanism having a small capacity, and the controller is configured to control the transfer device to transfer the first sample from the sample loading mechanism to the first centrifugation mechanism with the large capacity for centrifugation operation, and control transfer device to transfer the second sample, whose priority is higher than the priority of the first sample, from the sampling loading mechanism to the second centrifugation mechanism with the small capacity for centrifugation operation. In such a way, the second centrifugation mechanism with the small capacity is added for performing the centrifugation operation on the second sample with the higher priority, such as an emergency sample. Therefore, a rapid response to the samples with higher priority can be realized, and it is not required for the medical staff to manually carry the emergency samples to the offline centrifuge for centrifugation. Accordingly, the process of handling emergency samples can be effectively simplified, the processing time of the emergency samples can be reduced, and the time and effort of the medical staff consumed by emergency samples can be greatly reduced.

According to the sample processing device provided in the fourth objective and the sample analysis system provided in the fifth objective of the present disclosure, the centrifugation device is configured to include a first centrifugation mechanism and a second centrifugation mechanism, and the controller is configured to: control the transfer device to transfer the sample from the sample loading mechanism to the first centrifugation mechanism for the first centrifugation operation firstly, and then, if, after the first centrifugation operation, the sample is determined to be abnormal based on the feedback information from the identification component through the quality identification, control the transfer device to transfer the sample, which is abnormal after the first centrifugation operation, to the second centrifugation mechanism for the second centrifugation operation. In such a way, the second centrifugation mechanism is added for performing the centrifugation operation on the abnormal sample. Therefore, the automatic online processing for the abnormal samples can be performed, and it is not required for the medical staff to manually carry the abnormal samples to the offline centrifuge for centrifugation. Accordingly, the process of handling the abnormal samples can be effectively simplified, the time for processing the abnormal samples can be reduced, the time and effort of the medical staff consumed by abnormal samples can be greatly reduced, thereby reducing disruption to the work of medical staff by the abnormal samples.

### BRIEF DESCRIPTION OF THE DRAWINGS

In order to more clearly describe the solutions of embodiments of the present disclosure or the solutions in the related art, the figures which may be used in the description of the embodiments of the present disclosure or the related art will be briefly introduced below. It is apparent that the drawings are solely some embodiments of the present disclosure, and a person having ordinary skill in this field can obtain other figures according to structures illustrated in these figures without paying inventive efforts.
FIG. 1 is a schematic diagram of a sample processing device provided in an embodiment of the present disclosure.
FIG. 2 is a schematic diagram of a sample analysis system provided in an embodiment of the present disclosure.

List of reference numerals: 10: sample analysis system; 100: sample processing device; 110: sample loading mechanism; 120: centrifugation device; 121: first centrifugation mechanism; 122: second centrifugation mechanism; 130: identification component; 131: first identification unit; 132: second identification unit; 133: third identification unit; 140: transfer device; 141: first conveying track; 142: first transfer mechanism; 143: second transfer mechanism; 144: third transfer mechanism; 150: decapping mechanism; 200: sample analyzer; 300: transport device.

### DETAILED DESCRIPTION

The solutions in the embodiments of the present disclosure will be described clearly and completely with reference to the accompanying drawings in the embodiments of the application. It is apparent that the embodiments described herein are solely a part of the embodiments of the invention rather than all of the embodiments of the present disclosure. All other embodiments obtained by a person of ordinary skill in the art based on the embodiments of the present disclosure without paying inventive efforts shall fall within the scope of protection of the present disclosure.

It should be noted that all directional indications (such as up, down, left, right, front, rear, etc.) in the embodiments of the present disclosure are only used for explaining relative positional relationships, movement situations, etc. among components in a specific posture, and if the specific posture changes, the directional indications would change accordingly.

It should also be noted that when an element is referred to as being "fixed" or "disposed" on another element, the former may be directly attached to the later or there may be an intervening element. When an element is referred to as being "connected" to another element, the former may be directly connected to the later or indirectly connected to the later through an intervening element.

In addition, the terms such as "first", "second", etc. in the present disclosure are for descriptive purposes only, and cannot be understood as indicating or implying relative importance or implicitly indicating the number of the indicated technical features. Thus, a feature defined as "first" or "second" may explicitly or implicitly include at least one the feature. In addition, the technical solutions of the various embodiments may be combined with each other, provided that such combinations can be realized by a person of ordinary skill in the art. Should a combination of technical solutions result in mutual contradiction or impossibility of implementation, such combination shall be deemed not to exist and is not within the scope of protection claimed in the present disclosure.

The sample processing device provided in the embodiments of the present disclosure is a preprocessing device (or a sample management device) of the sample analysis system, and the sample processing device at least has a sample loading function and a centrifugation function. The sample analysis system belongs to the field of vitro diagnostic devices, and the sample analysis system includes at least one sample analyzer for testing the sample in addition to the pretreatment device.

### First embodiment

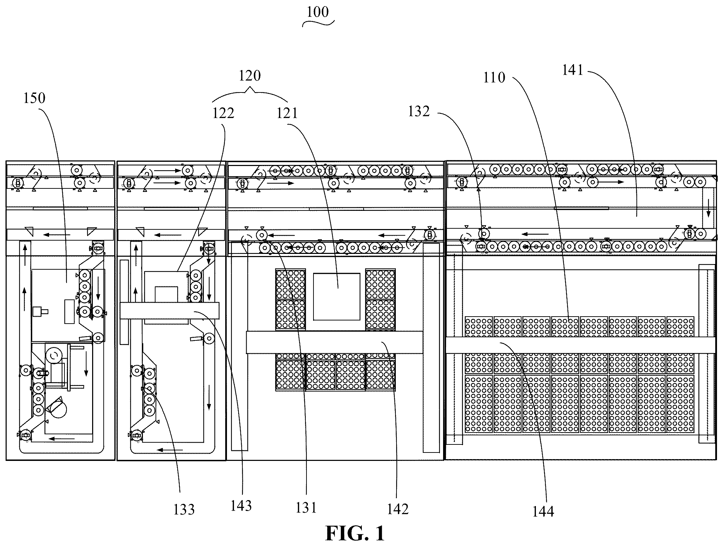

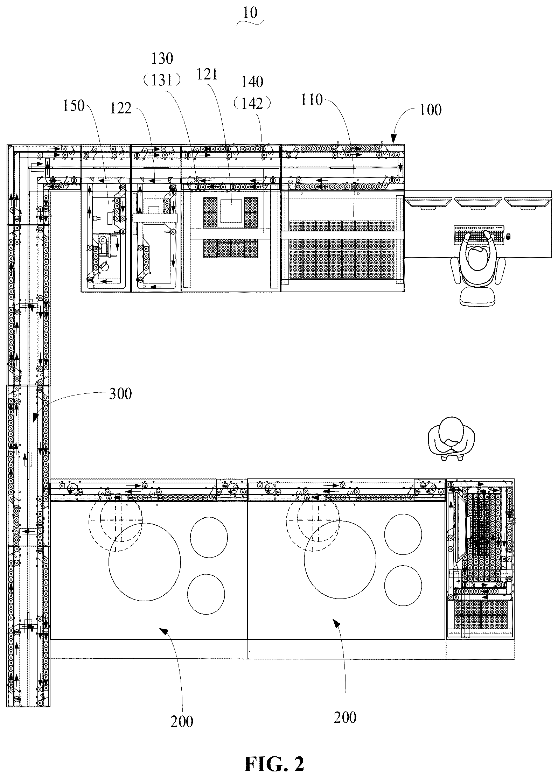

As illustrated in FIG. 1 and FIG. 2, the sample processing device 100 provided in the first embodiment of the present disclosure includes a sample loading mechanism 110, a centrifugation device 120, and a transfer device 140. The sample loading mechanism 110 is configured to receive a sample container containing a sample in order to load the sample. The centrifugation device 120 is configured to perform a centrifugation operation on the sample. The transfer device 140 is configured to at least transfer the sample from the sample loading mechanism 110 to the centrifugation device 120. In a specific application, the sample loading mechanism 110 receives the sample container containing the sample from an operator (such as a medical staff) or an operating robot to load the sample, and the transfer device 140 transfers the sample to be centrifuged from the sample loading mechanism 110 to the centrifugation device 120 for performing centrifugation, thereby realizing automatic centrifugation on the sample.

As an implementation, the sample processing device 100 further includes an identification component 130 and a controller. The identification component 130 is configured to at least perform quality identification on the sample after the centrifugation operation. The controller is configured to: control the identification component 130 to perform the quality identification on the sample after the centrifugation operation, determine whether the sample after the centrifugation operation is abnormal based on feedback information from the identification component 130. In this implementation, the quality identification needs to be performed on the centrifuged sample, to ensure that the sample forwarded to the next step complies with the quality requirement.

As an implementation, the controller is configured to: control the centrifugation device 120 to perform a first centrifugation operation on the sample at a first rotational speed, control the identification component 130 to perform the quality identification on the sample after the first centrifugation operation, determine, after the first centrifugation operation, whether the sample is abnormal based on feedback information from the identification component 130, and if the sample is determined to be abnormal, control the centrifugation device 120 to perform a second centrifugation operation on the sample, which is abnormal after the first centrifugation operation, at a second rotational speed. The second rotational speed is greater than the first rotational speed. That is, the operation of controlling the identification component 130 to perform the quality recognition on the sample after the centrifugation operation and determining whether the sample after the centrifugation operation is abnormal based on the feedback information from the identification component 130 includes: controlling the identification component 130 to perform the quality identification on the sample after the first centrifugation operation and determining, after the first centrifugation operation, whether the sample is abnormal based on the feedback information from the identification component 130. The controller, before controlling the identification component 130 to perform the quality identification on the sample after the first centrifugation operation, is further configured to: control the centrifugation device 120 to perform the first centrifugation operation on the sample at the first rotational speed. The controller, after determining whether the sample after the first centrifugation operation is abnormal based on the feedback information from the identification component 130, is further configured to: if, after the first centrifugation operation, the sample is determined to be abnormal, control the centrifugation device 120 to perform the second centrifugation operation on the sample, which is abnormal after the first centrifugation operation, at the second rotational speed. In the implementation, the centrifugation device 120 is controlled to perform the first centrifugation on the sample at the first rotational speed that is smaller firstly, and if, after the first centrifugation operation, the sample is determined to be abnormal through the quality identification, the centrifugation device 120 is controlled to perform the second centrifugation operation on the sample at the second rotational speed that is greater. Therefore, the automatic online processing for the abnormal samples can be performed through a higher rotational speed, and it is not required for the medical staff to manually carry the abnormal samples to the offline centrifuge for centrifugation. Accordingly, the process of handling abnormal samples can be effectively simplified, the processing time of the abnormal samples can be reduced, the time and effort of the medical staff consumed by abnormal samples can be greatly reduced, thereby reducing disruption to the work of medical staff by the abnormal samples.

As an implementation, the sample loaded through the sample loading mechanism 110 is a whole blood sample, and the whole blood sample after the first centrifugation operation is separated into at least an upper layer liquid, i.e., a supernatant and a lower layer liquid below the supernatant, the supernatant is serum or plasma, and the lower layer liquid is red blood cells. In a specific application, the whole blood sample after the first centrifugation operation may further include a middle layer liquid between the supernatant and the lower layer liquid, and the middle layer liquid includes white blood cells and/or platelets.

As an implementation, the supernatant is the liquid to be detected by the sample analyzer 200, and the quality identification on the sample performed by the identification component 130 is mainly to perform the quality identification on the supernatant. The above operation of determining whether the sample is abnormal is mainly to determine whether the supernatant is abnormal. However, in a specific application, the lower layer liquid or the middle layer liquid may also be used as the liquid to be detected for some of the sample testing items.

As an implementation, the sample being abnormal includes at least one of: the sample being a lipemic sample, presence of clot(s) in the sample, and presence of fibrin strand(s) in the sample. The lipemic sample, the clot in the sample, and the fibrin strand in the sample may be centrifuged at the second rotational speed in the embodiment. That is, the sample processing device 100 in the embodiment may process the lipemic sample, the sample with the clot, and the sample with the fibrin strand without requiring the medical staff to manually carry the abnormal samples, such as the lipemic sample, the sample with the clot, and the sample with the fibrin strand, to the offline centrifuge for centrifugation.

As an implementation, the sample processing device 100 further includes a mixing mechanism configured to perform a mixing operation on the sample. The controller is further configured to: control the mixing mechanism to mix the sample after the sample is determined to be abnormal and before controlling the centrifugation device 120 to perform the second centrifugation operation on the sample at the second rotational speed. In the implementation, the mixing operation is performed before the second centrifugation operation is performed on the abnormal sample, which facilitates elimination of a certain abnormal phenomena of some abnormal samples (e.g., fibrin strands) occurred in high-speed centrifugation, thereby ensuring the reliability of the high-speed centrifugation process for such abnormal samples.

As an implementation, the controller is further configured to: determine, based on an abnormal type of the sample, whether to control the mixing mechanism to mix the sample after the sample is determined to be abnormal and before controlling the centrifugation device 120 to perform the second centrifugation operation on the sample at the second rotational speed. In this implementation, before the second centrifugation operation, whether the sample needs to be mixed may be determined based on the abnormal type of the sample, thereby avoiding unnecessary mixing operation. For example, if the abnormal type of sample is the lipemic sample, the mixing operation may not be performed before the second centrifugation operation, thereby improving the processing efficiency of the lipemic sample. In an alternative implementation, in a specific application, regardless of the abnormal type of the sample, the abnormal sample may be mixed by the mixing mechanism firstly, and then the centrifugation device 120 is controlled to perform the second centrifugation operation on the sample at the second rotational speed.

As an implementation, the controller is further configured to: when the abnormal type of the sample is the presence of the fibrin strand(s) in the sample, control the mixing mechanism to mix the sample firstly, and then control the centrifugation device 120 to perform the second centrifugation operation on the sample at the second rotational speed. In the case that the abnormal type of the sample is the presence of the fibrin strand(s) in the sample, since the fibrin strands may float on the supernatant, the sample needs to be mixed firstly, so that the lower liquid would carry the fibrin strands down, thereby facilitating that the fibrin strands can be effectively removed from the supernatant during the high-speed centrifugation.

As an implementation, the controller is further configured to: when the abnormal type of the sample is the presence of the clot(s) in the sample, control the mixing mechanism to mix the sample firstly, and then control the centrifugation device 120 to perform the second centrifugation operation on the sample at the second rotational speed. In the case that the abnormal type of the sample is the presence of the clot(s) in the sample, the sample is mixed, which allows the lower liquid to carry the clots down, thereby facilitating that the clots can be effectively removed from the supernatant during the high-speed centrifugation. However, in a specific application, when the abnormal type of the sample is the presence of the clot(s) in the sample, the mixing operation may not be performed before the second centrifugation operation is performed. In such application, when the abnormal type of the sample is the presence of the clot(s) in the sample, the second centrifugation operation may be directly performed.

As an implementation, the second rotational speed is greater than or equal to 8000 rpm. The rotational speed of 8000 rpm or higher can meet the centrifugation requirements for processing the abnormal samples.

As an implementation, the second rotational speed is greater than or equal to 10,000 rpm. In this implementation, the rotational speed of 10,000 rpm facilitates ensuring the efficiency and sufficiency of centrifugation processing for the abnormal samples.

As an implementation, the first rotational speed is less than or equal to 5000 rpm. If the first rotational speed is set too high, there is a risk that blood cells may be damaged. In this implementation, the first rotational speed is set to 5000 rpm or less, thereby ensuring that the blood cells in the sample would not be damaged by the first centrifugation operation.

As an implementation, the first rotational speed is greater than or equal to 2000 rpm and less than or equal to 5000 rpm. The centrifugation operation at a rotational speed from 2000 rpm to 5000 rpm can meet the requirements of the centrifugation for most samples, which also does not cause damage to the blood cells (including red blood cells, white blood cells and platelets) in the samples.

As an implementation, the centrifugation device 120 includes a first centrifugation mechanism 121 and a second centrifugation mechanism 122. The first centrifugation mechanism 121 and the second centrifugation mechanism 122 are capable of operating independently, that is, the first centrifugation mechanism 121 and the second centrifugation mechanism 122 may perform centrifugation operations on different samples at the same time. The controller is further configured to: control the transfer device 140 to transfer the sample from the sample loading mechanism 110 to the first centrifugation mechanism 121, control the first centrifugation mechanism 121 to perform the first centrifugation operation on the sample at the first rotational speed, if, after the first centrifugation operation, the sample is determined to be abnormal based on the feedback information from the identification component 130, control the transfer device 140 to transfer the sample, which is abnormal after the first centrifugation operation, to the second centrifugation mechanism 122, and control the second centrifugation mechanism 122 to perform the second centrifugation operation on the sample, which is abnormal after the first centrifugation operation, at the second rotational speed. The first centrifugation mechanism 121 mainly performs centrifugation on normal samples at a lower rotational speed, and the second centrifugation mechanism 122 mainly performs centrifugation on abnormal samples at a higher rotational speed, which enables different centrifugation tasks-specifically, batch low-speed centrifugation of normal samples and high-speed centrifugation of abnormal samples-to be carried out by different centrifugation mechanisms. Therefore, the low-speed centrifugation mechanism and the high-speed centrifugation mechanism can be designed separately, which not only ensures that the second centrifugation mechanism 122 effectively processes the abnormal samples but also reduces the rotational speed requirements imposed on the first centrifugation mechanism 121. In this implementation, an independent centrifugation mechanism is provided for processing the abnormal samples, so that the processing of abnormal samples does not disrupt the large-batch centrifugation of normal samples. Therefore, both the requirement for low-cost, high-speed centrifugation of abnormal samples and the requirement for batch-wise, low-speed centrifugation of normal samples can be effectively balanced.

As an implementation, a capacity of the first centrifugation mechanism 121 is greater than a capacity of the second centrifugation mechanism 122. The capacity of the first centrifugation mechanism 121 is a maximum number of samples that the first centrifugation mechanism 121 is capable of holding in a single centrifugation operation, and the capacity of the second centrifugation mechanism 122 is a maximum number of samples that the second centrifugation mechanism 122 is capable of holding in a single centrifugation operation. In this implementation, a large-capacity centrifugation mechanism is employed for low-speed centrifugation, which facilitates meeting the requirements of the large-batch centrifugation of samples. The high-speed centrifugation mechanism with small capacity is adopted for processing abnormal samples, which is sufficient for processing requirements due to the low proportion and random occurrence of such samples. Moreover, because the centrifugation mechanism with a small capacity features a compact size and a small moment of inertia, it more readily attains a high rotational speed. Therefore, it is beneficial to combine the small capacity and the high rotational speed.

As an implementation, the first centrifugation mechanism 121 is configured to perform the centrifugation operation on a sample container containing the sample, and the second centrifugation mechanism 122 is configured to perform the centrifugation operation on a sample container containing the sample. The capacity of the first centrifugation mechanism 121 is a maximum number of sample containers that the first centrifugation mechanism 121 is capable of loading in a single centrifugation operation, and the capacity of the second centrifugation mechanism 122 is a maximum number of sample containers that the second centrifugation mechanism 122 is capable of loading in a single centrifugation operation.

In the above solution, the sample container loaded through the sample loading mechanism 110 and the sample container centrifuged by the first centrifugation mechanism 121 are the same container, and the sample container centrifuged by the first centrifugation mechanism 121 and the sample container centrifuged by the second centrifugation mechanism 122 are the same container. However, in a specific application, as an alternative implementation, the sample container loaded through the sample loading mechanism 110 and the sample container centrifuged by the first centrifugation mechanism 121 may be different containers, and the sample container centrifuged by the first centrifugation mechanism 121 and the sample container centrifuged by the second centrifugation mechanism 122 may also be different containers. In other words, in the alternative implementation, the sample, after being loaded through the sample loading mechanism 110 and before being centrifuged by the first centrifugation mechanism 121, is transferred from one container to another; and the sample, after being centrifuged by the first centrifugation mechanism 121 and before being centrifuged by the second centrifugation mechanism 122, is transferred from one container to another.

As an implementation, the sample loading mechanism 110 configured to receive the sample container containing the sample in order to load the sample includes that: the sample loading mechanism 110 is configured to receive a first sample container containing a first sample in order to load the first sample, and receive a second sample container containing a second sample in order to load the second sample. A priority for processing the second sample is higher than a priority for processing the first sample. The second sample may specifically be an emergency sample. In this implementation, the sample loading mechanism 110 is used for loading both the normal sample (non-emergency sample) and the emergency sample, and the non-emergency sample and emergency sample are loaded through the same sample loading mechanism 110, thereby achieving structural simplicity and meeting the requirements for loading both the non-emergency samples and emergency samples. However, in a specific application, as an alternative implementation, the emergency sample and non-emergency sample may be loaded through different loading mechanisms.

As an implementation, the operations of controlling the transfer device 140 to transfer the sample to the first centrifugation mechanism 121, controlling the first centrifugation mechanism 121 to perform the first centrifugation operation on the sample at the first rotational speed, and if, after the first centrifugation operation, the sample is determined to be abnormal based on the feedback information from the identification component 130, controlling the transfer device 140 to transfer the sample, which is abnormal after the first centrifugation operation, to the second centrifugation mechanism 122, and controlling the second centrifugation mechanism 122 to perform the second centrifugation operation on the sample, which is abnormal after the first centrifugation operation, at the second rotational speed include: controlling the transfer device 140 to transfer the first sample from the sample loading mechanism 110 to the first centrifugation mechanism 121, controlling the first centrifugation mechanism 121 to perform the first centrifugation operation on the first sample at the first rotational speed, and if, after the first centrifugation operation, the first sample is determined to be abnormal based on the feedback information from the identification component 130, controlling the transfer device 140 to transfer the first sample, which is abnormal after the first centrifugation operation, to the second centrifugation mechanism 122, and controlling the second centrifugation mechanism 122 to perform the second centrifugation operation on the first sample, which is abnormal after the first centrifugation operation, at the second rotational speed. In this implementation, the first centrifugation mechanism 121 is mainly configured to perform low-speed centrifugation on the non-emergency sample, and the second centrifugation mechanism 122 is configured to at least perform high-speed centrifugation on the non-emergency sample that is determined to be abnormal after low-speed centrifugation.

As an implementation, the centrifugation device 120 configured to perform the centrifugation operation on the sample includes that: the centrifugation device 120 is configured to perform the centrifugation operation on the first sample and perform the centrifugation operation on the second sample. The transfer device 140 configured to at least transfer the sample from the sample loading mechanism 110 to the centrifugation device 120 includes that: the transfer device 140 is configured to transfer the first sample from the sample loading mechanism 110 to the centrifugation device 120 and transfer the second sample from the sample loading mechanism 110 to the centrifugation device 120. In this implementation, the centrifugation device 120 is configured to perform centrifugation on both normal samples and emergency samples. However, in a specific application, as an alternative implementation, the emergency samples may also be processed by an offline centrifuge (which is independent of the sample analysis system 10) and then placed on the sample analysis system 10 for testing.

As an implementation, the controller is further configured to: control the transfer device 140 to transfer the second sample from the sample loading mechanism 110 to the second centrifugation mechanism 122, and control the second centrifugation mechanism 122 to perform the centrifugation operation on the second sample. In this implementation, the second centrifugation mechanism 122 for processing the abnormal samples is also used for centrifugation of the emergency samples. Since the proportions of the abnormal sample and the emergency sample are relatively small, the centrifugation of the abnormal sample and the emergency sample share a common centrifugation mechanism, which simplifies the structure of the sample processing device 100 while meeting the rapid-response requirements for the emergency samples.

As an implementation, the identification component 130 configured to perform the quality identification on the sample after the centrifugation operation includes that: the identification component 130 is configured to perform the quality identification on the first sample after the centrifugation operation, and perform the quality identification on the second sample after the centrifugation operation. In this implementation, the identification component 130 is configured to perform the quality identification on both the normal sample and emergency sample.

As an implementation, the operations of controlling the transfer device 140 to transfer the second sample from the sample loading mechanism 110 to the second centrifugation mechanism 122, and controlling the second centrifugation mechanism 122 to perform the centrifugation operation on the second sample include: controlling the transfer device 140 to transfer the second sample from the sample loading mechanism 110 to the second centrifugation mechanism 122, controlling the second centrifugation mechanism 122 to perform the first centrifugation operation on the second sample at the first rotational speed, controlling the identification component 130 to perform the quality identification on the second sample after the first centrifugation operation, and if, after the first centrifugation operation, the second sample is determined to be abnormal based on the feedback information from the identification component 130, controlling the second centrifugation mechanism 122 to perform the second centrifugation operation on the second sample, which is abnormal after the first centrifugation operation, at the second rotational speed. In this implementation, the emergency sample is also centrifuged at a low speed firstly, and then is centrifuged at a high speed after being determined to be abnormal through the quality identification, which ensures that the emergency sample with the quality issue is prevented from being sent to the sample analyzer 200 for testing. Therefore, the rapid-response capability required for emergency testing can be maintained while ensuring the accuracy and reliability of testing results.

As an implementation, the capacity of the first centrifugation mechanism 121 is greater than or equal to 60 sample containers.

As an implementation, the capacity of the first centrifugation mechanism 121 may be 120 sample containers, or 100 sample containers, or 80 sample containers, or 60 sample containers.

As an implementation, the capacity of the second centrifugation mechanism 122 is less than or equal to 40 sample containers.

As an implementation, the capacity of the second centrifugation mechanism 122 is greater than or equal to one sample container and less than or equal to 40 sample containers.

As an implementation, the capacity of the second centrifugation mechanism 122 is greater than or equal to one sample container and less than or equal to 20 sample containers.

As an implementation, the capacity of the second centrifugation mechanism 122 may be 4 sample containers, or 6 sample containers, or 8 sample containers, or 10 sample containers, or 12 sample containers, or 14 sample containers, or 16 sample containers, or 18 sample containers, or 20 sample containers.

As an implementation, the transfer device 140 includes a first conveying track 141, a first transfer mechanism 142 and a second transfer mechanism 143. The first conveying track 141 is configured to transfer, under control of the controller, the sample container outputted from the sample loading mechanism 110 to the first centrifugation mechanism 121 or the second centrifugation mechanism 122. The first transfer mechanism 142 is configured to transfer, under control of the controller, the sample container between the first conveying track 141 and the first centrifugation mechanism 121. The second transfer mechanism 143 is configured to transfer, under control of the controller, the sample container between the first conveying track 141 and the second centrifugation mechanism 122. In this implementation, transfer of the sample among the sample loading mechanism 110, the first conveying track 141, the first transfer mechanism 142 and the second transfer mechanism 143 is realized by transferring the sample container, and there is no need to pipet the sample.

In the above solution, there is no need to pipet the sample between the first centrifugation operation and the second centrifugation operation. However, in a specific application, the transfer of the sample between the first centrifugation operation and the second centrifugation operation may also be realized by pipetting the sample. For example, as an alternative implementation, the transfer device 140 includes a pipetting mechanism which is configured to aspirate and dispense the sample. The controller is further configured to: control the centrifugation device 120 to perform the first centrifugation operation on the sample at the first rotational speed, control the identification component 130 to perform the quality identification on the sample after the first centrifugation operation, determine whether the sample is abnormal based on the feedback information from the identification component 130, and when the sample is determined to be abnormal, control the pipetting mechanism to aspirate a supernatant from the sample (i.e., the sample contained in a sample container in this implementation) after the first centrifugation operation and dispense the supernatant into an empty sample container, and control the centrifugation device 120 to perform the second centrifugation operation on the supernatant (i.e., a separate sample container containing the supernatant in this implementation) dispensed by the pipetting mechanism at the second rotational speed. In this alternative implementation, pipetting of the sample is performed between the first centrifugation operation and the second centrifugation operation. That is, when the sample after the low-speed centrifugation is determined to be abnormal, the supernatant after the first centrifugation operation is transferred from a sample container to another sample container for the second centrifugation operation, so as to avoid damage to the blood cells in the middle and lower layers caused by high-speed centrifugation.

As an implementation, the first transfer mechanism 142 and the second transfer mechanism 143 are two mechanisms that are capable of operating independently. The first transfer mechanism 142 and the second transfer mechanism 143 can operate concurrently, thereby improving the scheduling efficiency of batch samples. However, in a specific application, as an alternative implementation, the first transfer mechanism 142 and the second transfer mechanism 143 may be the same mechanism.

As an implementation, the first transfer mechanism 142 includes a first gripper and a first drive component. The first gripper is configured to grip the sample container, and the first drive component is configured to drive the first gripper to perform a three-dimensional or two-dimensional spatial movement, to enable the first gripper to move to different workstations.

As an implementation, the second transfer mechanism 143 includes a second gripper and a second drive component. The second gripper is configured to grip the sample container, and the second drive component is configured to drive the second gripper to perform a three-dimensional or two-dimensional spatial movement, to enable the second gripper to move to different workstations.

As an implementation, the transfer device 140 further includes a third transfer mechanism 144. The third transfer mechanism 144 is configured to transfer, under control of the controller, the sample container between the first conveying track 141 and the sample loading mechanism 110. The third transfer mechanism 144 is a mechanism operable independently of the first transfer mechanism 142 and the second transfer mechanism 143. The third transfer mechanism 144, the first transfer mechanism 144 and the second transfer mechanism 143 can operate concurrently, thereby improving the scheduling efficiency of batch samples. However, in a specific application, as an alternative implementation, the third transfer mechanism 144 may be the same mechanism as either the first transfer mechanism 142 or the second transfer mechanism 143; or the third transfer mechanism 144, the first transfer mechanism 142 and the second transfer mechanism 143 may be the same mechanism.

As an implementation, the third transfer mechanism 144 includes a third gripper and a third drive component. The third gripper is configured to grip the sample container, and the third drive component is configured to drive the third gripper to perform a three-dimensional or two-dimensional spatial movement, to enable the third gripper to move to different workstations.

As an implementation, the sample loading mechanism 110 configured to receive the sample container containing the sample in order to load the sample includes that: the sample loading mechanism 110 is configured to receive a sample container containing an uncentrifuged sample in order to load the uncentrifuged sample and receive a sample container containing a centrifuged sample in order to load the centrifuged sample. The centrifugation device 120 configured to perform the centrifugation operation on the sample includes that: the centrifugation device 120 is configured to at least perform the centrifugation operation on the uncentrifuged sample. The transfer device 140 configured to at least transfer the sample from the sample loading mechanism 110 to the centrifugation device 120 includes that: the transfer device 140 is configured to at least transfer the uncentrifuged sample from the sample loading mechanism 110 to the centrifugation device 120. In this implementation, the sample loading mechanism 110 is configured to load both the uncentrifuged sample and the centrifuged sample, and the uncentrifuged sample and centrifuged sample are loaded through the same sample loading mechanism 110, thereby achieving structural simplicity and meeting the loading requirements for both the uncentrifuged samples and centrifuged samples. However, in a specific application, as an alternative implementation, the uncentrifuged sample and centrifuged sample may be loaded through different loading mechanisms.

As an implementation, the operations of controlling the centrifugation device 120 to perform the first centrifugation operation on the sample at the first rotational speed, controlling the identification component 130 to perform the quality identification on the sample after the first centrifugation operation, determining, after the first centrifugation operation, whether the sample is abnormal based on the feedback information from the identification component 130, and if the sample is determined to be abnormal, controlling the centrifugation device 120 to perform the second centrifugation operation on the sample, which is abnormal after the first centrifugation operation, at the second rotational speed include: controlling the transfer device 140 to transfer the uncentrifuged sample from the sample loading mechanism 110 to the centrifugation device 120, controlling the centrifugation device 120 to perform the first centrifugation operation on the uncentrifuged sample at the first rotational speed, controlling the identification component 130 to perform the quality identification on the sample after the first centrifugation operation, determining, after the first centrifugation operation, whether the sample is abnormal based on the feedback information from the identification component 130, and if the sample is determined to be abnormal, controlling the centrifugation device 120 to perform the second centrifugation operation on the sample, which is abnormal after the first centrifugation operation, at the second rotational speed. In this implementation, the uncentrifuged sample needs to be centrifuged at a lower speed firstly, then the quality identification is performed on the sample to determine whether the quality thereof is abnormal. If the quality is determined to be abnormal, the high-speed centrifugation is performed on the sample; when the sample is determined not to be abnormal through the quality identification, the sample may be transferred to the sample analyzer 200 for testing.

As an implementation, the controller is further configured to: determine whether the centrifuged sample is abnormal based on the feedback information from the identification component 130, and when the centrifuged sample is determined to be abnormal, control the transfer device 140 to transfer the centrifuged sample to the centrifugation device 120, and control the centrifugation device 120 to perform the second centrifugation operation on the centrifuged sample at the second rotational speed. In this implementation, the centrifuged sample does not need to be centrifuged at a low speed, and the quality identification is directly performed on the centrifuged sample to determine whether the quality thereof is abnormal. If the quality is determined to be abnormal, the high-speed centrifugation is performed on the sample; when the centrifuged sample is determined not to be abnormal through the quality identification, the centrifuged sample may be transferred to the sample analyzer 200 for testing.

As an implementation, the uncentrifuged sample is centrifuged by the first centrifugation mechanism 121 at a low speed firstly, then the quality identification is performed on the sample to determine whether the quality thereof is abnormal. If the quality is determined to be abnormal, the sample is transferred to the second centrifugation mechanism and centrifuged by the second centrifugation mechanism 122 at a high speed. The centrifuged sample does not need to be centrifuged by the first centrifugation mechanism 121 at a low speed, the quality identification is directly performed on the centrifuged sample to determine whether the quality thereof is abnormal. If the quality is determined to be abnormal, the sample is transferred to the second centrifugation mechanism and centrifuged by the second centrifugation mechanism 122 at a high speed.

As an implementation, the identification component 130 includes a first identification unit 131. The first identification unit 131 is configured to perform the quality identification on the sample after the centrifugation operation. The operation of determining, after the first centrifugation operation, whether the sample is abnormal based on the feedback information from the identification component 130 includes: determining, after the first centrifugation operation, whether the sample is abnormal based on feedback information from the first identification unit 131.

As an implementation, the first identification unit 131 is a visual identification unit such as a charge-coupled device (CCD) camera, which is configured to capture images and feed them back to the controller for analysis, to determine whether the sample has quality abnormalities.

As an implementation, the first identification unit 131 is configured to perform the quality identification on the sample after the first centrifugation operation performed by the first centrifugation mechanism 121.

As an implementation, the first identification unit 131 is disposed on the first conveying track 141 and is disposed facing the first centrifugation mechanism 121. However, in a specific application, the location that the first identification unit 131 is disposed is not limited thereto. For example, as an alternative implementation, the first identification unit 131 may be disposed on the first centrifugation mechanism 121 or the first transfer mechanism 142.

As an implementation, the identification component 130 further includes a second identification unit 132, the second identification unit 132 is configured to identify the sample container outputted from the sample loading mechanism 110. The operation of determining whether the centrifuged sample is abnormal based on the feedback information from the identification component 130 includes: determining whether the centrifuged sample is abnormal based on the feedback information from the second identification unit 132. In this implementation, the quality identification on the centrifuged sample and the sample, after the first centrifugation operation performed by the first centrifugation mechanism 121, is performed by different identification units, so as to reduce unnecessary cross-area scheduling. However, in a specific application, as an alternative implementation, the quality identification on the centrifuged sample and the sample, after the first centrifugation operation performed by the first centrifugation mechanism 121, may be performed by the same identification unit.

As an implementation, the controller is further configured to: determine, based on feedback information from the second identification unit 132, whether the sample in the sample container outputted from the sample loading mechanism 110 is an uncentrifuged sample or a centrifuged sample. In this implementation, the second identification unit 132 may be configured to identify the type of the sample in addition to identifying the quality identification.

As an embodiment, the controller is further configured to obtain a sample testing item information and/or patient information of the sample in the sample container based on the feedback information from the second identification unit 132.

As an implementation, the controller is further configured to: determine whether the sample in the sample container is an emergency sample or a non-emergency sample based on the feedback information from the second identification unit 132.

As an implementation, the second identification unit 132 is a visual identification unit such as a CCD camera, which is configured to capture images and feed the images back to the controller for analysis.

As an implementation, the second identification unit 132 is disposed on the first conveying track 141 and is disposed facing the sample loading mechanism 110. However, in a specific application, the location that the second identification unit 132 is disposed is not limited thereto. For example, as an alternative implementation, the second identification unit 132 may be disposed on the sample loading mechanism 110 or the third transfer mechanism 144.

As an implementation, the identification component 130 further includes a third identification unit 133. The third identification unit 133 is configured to perform the quality identification on the sample after the centrifugation operation performed by the second centrifugation mechanism 122.

As an implementation, the third identification unit 133 is disposed on the second centrifugation mechanism 122. However, in a specific application, the location that the second identification unit 132 is disposed is not limited thereto. For example, as an alternative implementation, the second identification unit 132 may be disposed on the second transfer mechanism 143, or the third identification unit 133 may be disposed on the first conveying track 141 and is disposed facing the second centrifugation mechanism 122.

As an implementation, the sample processing device 100 further includes a human-machine interaction device. The human-machine interaction device is configured to at least allow an operator to set a rotational speed for centrifugation and/or a centrifugation duration for the centrifugation device 120. In this implementation, centrifugation parameters (including the rotational speed for centrifugation and/or the centrifugation duration) of the centrifugation device 120 may be set manually, so that the operator can flexibly adjust the centrifugation parameters of different sample testing items according to actual requirements.

As an implementation, the human-machine interaction device includes a display, and the display is configured to at least display a centrifugation parameter setting interface of the centrifugation device 120, and the operator may set the rotational speed for centrifugation and/or the centrifugation duration through the centrifugation parameter setting interface.

As an implementation, the operation of setting the rotational speed for centrifugation and/or the centrifugation duration of the centrifugation device 120 includes: setting the rotational speed for centrifugation and/or the centrifugation duration of the second centrifugation mechanism 122. In this implementation, the centrifugation parameters of the second centrifugation mechanism 122 can be set, so as to facilitate the centrifugation requirements of the emergency samples and abnormal samples.

As an implementation, the operation of setting the rotational speed for centrifugation and/or the centrifugation duration of the centrifugation device 120 further includes: setting the rotational speed for centrifugation and/or the centrifugation duration of the first centrifugation mechanism 121. In this implementation, the centrifugation parameters of the first centrifugation mechanism 121 can be set, so as to facilitate the centrifugation requirements of different sample testing items.

As an implementation, the sample processing device 100 further includes a decapping mechanism 150. The decapping mechanism 150 is configured to decap a sample container after centrifugation.

In addition, there is also provided a sample analysis system 10 in the embodiment. The sample analysis system 10 includes a transport device 300, at least one sample analyzer 200, and the above-described sample processing device 100. The sample analyzer 200 is configured to perform at least one sample testing item on the sample. The transport device 300 is configured to transport the sample from the sample processing device 100 to the sample analyzer 200 for aspiration of the sample by the sample analyzer 20. According to the sample analysis system 10 in this implementation, automatic online processing of abnormal samples can be realized, and it is not required for the medical staff to manually carry the abnormal samples to the offline centrifuge for centrifugation.

As an implementation, the at least one sample analyzer 200 includes at least one of: a coagulation analyzer, a biochemical analyzer, and an immunological analyzer.

As an implementation, the sample analysis system 10 is configured as a sample analysis line, and the transport device 300 includes a second conveying track.

In addition, there is also provided a sample processing method in the embodiment. The sample processing method includes: controlling the centrifugation device 120 to perform a first centrifugation operation on the sample at a first rotational speed; controlling the identification component 130 to perform the quality identification on the sample after the first centrifugation operation; determining, after the first centrifugation operation, whether the sample is abnormal based on feedback information from the identification component 130; and if the sample is determined to be abnormal, controlling the centrifugation device 120 to perform a second centrifugation operation on the sample, which is abnormal after the first centrifugation operation, at a second rotational speed. The second rotational speed is greater than the first rotational speed.

The specific principles and other implementations of the sample processing method provided in this embodiment are similar to those described in the above-described sample processing device 100, and will not be elaborated in detail herein.

There is also provided a computer-readable storage medium in an embodiment, the computer-readable storage medium has stored thereon a computer program which, when being executed by a processor (such as the above-described controller), causes the processor to perform operations of the above-described sample processing method. The computer-readable storage medium may be an internal storage unit of the sample processing device 100 described above, for example, a hard disk or a memory of the sample processing device 100. Alternatively, the computer-readable storage medium may be an external storage device of the sample processing device 100, such as a plug-in hard disk, a smart media card (SMC), a secure digital (SD) card, a flash card, or the like, equipped on the sample processing device 100.

### Second embodiment

The sample processing device 100, the sample analysis system 10, and the sample processing method provided in this embodiment differ from those in the first embodiment mainly in the centrifugation mechanism for the emergency sample. Specifically, in the first embodiment, the centrifugation mechanism for centrifuging the emergency sample is the same centrifugation mechanism as the centrifugation mechanism for centrifuging the abnormal sample; however, in this embodiment, the centrifugation mechanism for centrifuging the emergency sample is a centrifugation mechanism different from the centrifugation mechanism for centrifuging the abnormal sample.

In addition, similar to the first embodiment, the sample loading mechanism 110 configured to receive the sample container containing the sample in order to load the sample, includes that: the sample loading mechanism 110 is configured to receive a first sample container containing a first sample in order to load the first sample, and receive a second sample container containing a second sample in order to load the second sample. The centrifugation device 120 configured to perform the centrifugation operation on the sample includes that: the centrifugation device 120 is configured to perform the centrifugation operation on the first sample and perform the centrifugation operation on the second sample. The identification component 130 configured to perform the quality identification on the sample after the centrifugation operation includes that: the identification component 130 is configured to perform the quality identification on the first sample after the centrifugation operation, and perform the quality identification on the second sample after the centrifugation operation. The transfer device 140 configured to at least transfer the sample from the sample loading mechanism 110 to the centrifugation device 120 includes that: the transfer device 140 is configured to transfer the first sample from the sample loading mechanism 110 to the centrifugation device 120 and transfer the second sample from the sample loading mechanism 110 to the centrifugation device 120. The operations of controlling the transfer device 140 to transfer the sample to the first centrifugation mechanism 121, controlling the first centrifugation mechanism 121 to perform the first centrifugation operation on the sample at the first rotational speed, and if, after the first centrifugation operation, the sample is determined to be abnormal based on the feedback information from the identification component 130, controlling the transfer device 140 to transfer the sample, which is abnormal after the first centrifugation operation, to the second centrifugation mechanism 122, and controlling the second centrifugation mechanism 122 to perform the second centrifugation operation on the sample, which is abnormal after the first centrifugation operation, at the second rotational speed include: controlling the transfer device 140 to transfer the first sample to the first centrifugation mechanism 121, controlling the first centrifugation mechanism 121 to perform the first centrifugation operation on the first sample at the first rotational speed, and if, after the first centrifugation operation, the first sample is determined to be abnormal based on the feedback information from the identification component 130, controlling the transfer device 140 to transfer the first sample, which is abnormal after the first centrifugation operation, to the second centrifugation mechanism 122, and controlling the second centrifugation mechanism 122 to perform the second centrifugation operation on the first sample, which is abnormal after the first centrifugation operation, at the second rotational speed. A priority for processing the second sample is higher than a priority for processing the first sample.

Different from the first embodiment, in this embodiment, the centrifugation device 120 includes a third centrifugation mechanism in addition to the first centrifugation mechanism 121 and the second centrifugation mechanism 122. The third centrifugation mechanism is capable of operating independently with respect to the first centrifugation mechanism 121 and the second centrifugation mechanism 122, that is, the first centrifugation mechanism 121, the second centrifugation mechanism 122, and the third centrifugation mechanism are capable of operating independently. The controller is further configured to: control the transfer device 140 to transfer the second sample from the sample loading mechanism 110 to the third centrifugation mechanism, and control the third centrifugation mechanism to perform a centrifugation operation on the second sample. In this implementation, the first centrifugation mechanism 121 is configured to perform low-speed centrifugation on the non-emergency sample, the second centrifugation mechanism 122 is configured to at least perform high-speed centrifugation on the non-emergency sample that is determined to be abnormal, and the third centrifugation mechanism is configured to perform the centrifugation operation on the emergency sample. In this implementation, a separate centrifugation mechanism is provided for centrifuging the emergency sample, so as to ensure a rapid response capability for emergency samples.

As an implementation, the operations of controlling the transfer device 140 to transfer the second sample from the sample loading mechanism 110 to the third centrifugation mechanism, and controlling third centrifugation mechanism to perform the centrifugation operation on the second sample include: controlling the transfer device 140 to transfer the second sample from the sample loading mechanism 110 to the third centrifugation mechanism, and controlling the third centrifugation mechanism to perform the first centrifugation operation on the second sample at the first rotational speed. The controller is further configured to: control the identification component 130 to perform the quality identification on the second sample after the first centrifugation operation, and if, after the first centrifugation operation, the second sample is determined to be abnormal based on the feedback information from the identification component 130, control the transfer device 140 to transfer the second sample, which is abnormal after the first centrifugation operation, to the second centrifugation mechanism 122, and control the second centrifugation mechanism 122 to perform the second centrifugation operation on the second sample, which is abnormal after the first centrifugation operation, at the second rotational speed. Specifically, when the emergency sample, after being centrifuged by the third centrifugation mechanism, is determined to be abnormal through the quality identification, the emergency sample is centrifuged by the second centrifugation mechanism 122 at a higher speed. In this implementation, the third centrifugation mechanism is mainly configured to perform the low-speed centrifugation on the emergency sample, and the second centrifugation mechanism 122 is configured to perform the high-speed centrifugation on the emergency sample which is determined to be abnormal in addition to performing the high-speed centrifugation on the non-emergency sample which is determined to be abnormal. Thus, the rotational speed requirement for the third centrifugation mechanism can be reduced.

However, in a specific application, the emergency sample which is abnormal is not limited to being centrifuged by the second centrifugation mechanism 122 at a high speed. For example, as an alternative implementation, the third centrifugation mechanism may also be designed to perform both the low-speed centrifugation on the emergency sample and the high-speed centrifugation on the emergency sample which is abnormal. In this alternative implementation, the operations of controlling the transfer device 140 to transfer the second sample from the sample loading mechanism 110 to the third centrifugation mechanism, and controlling the third centrifugation mechanism to perform the centrifugation operation on the second sample include: controlling the transfer device 140 to transfer the second sample from the sample loading mechanism 110 to the third centrifugation mechanism, controlling the third centrifugation mechanism to perform the first centrifugation operation on the second sample at the first rotational speed, controlling the identification component 130 to perform the quality identification on the second sample after the first centrifugation operation, and if, after the first centrifugation operation, the second sample is determined to be abnormal based on the feedback information from the identification component 130, controlling the third centrifugation mechanism to perform the second centrifugation operation on the second sample, which is abnormal after the first centrifugation operation, at the second rotational speed. In this alternative implementation, when the emergency sample, after being centrifuged by the third centrifugation mechanism, is determined to be abnormal through the quality identification, the emergency sample is centrifuged by the third centrifugation mechanism at a higher speed.

In addition to the above-described differences, other parts of the sample processing device 100, the sample analysis system 10, and the sample processing method provided in this embodiment can be referred to the first embodiment, and will not be elaborated in detail herein.

### Third embodiment

The sample processing device 100, the sample analysis system 10, and the sample processing method provided in this embodiment differ from those of the first embodiment mainly in focus of protection. Specifically, the first embodiment focuses on: low-speed centrifugation followed by high-speed centrifugation for the abnormal sample after quality identification; and this embodiment focuses on processing the abnormal sample at a rotational speed of 8000 rpm or more by the sample processing device 100 and the sample analysis system 10.

Specifically, the sample processing device 100 provided in the embodiment includes: a sample loading mechanism 110, a centrifugation device 120, an identification component 130, a transfer device 140 and a controller. The sample loading mechanism 110 is configured to receive a sample container containing a sample in order to load the sample. The centrifugation device 120 is configured to perform a centrifugation operation on the sample. The transfer device 140 is configured to at least transfer the sample from the sample loading mechanism 110 to the centrifugation device 120. The identification component 130 is configured to at least perform quality identification on the sample after the centrifugation operation. The controller is configured to: control the identification component 130 to perform the quality identification on the sample after the centrifugation operation; determine, after the centrifugation operation, whether the sample is abnormal based on feedback information from the identification component 130; and if the sample is determined to be abnormal, control the centrifugation device 120 to perform the centrifugation operation on the sample at a second rotational speed. The second rotational speed is greater than or equal to 8000 rpm. According to this embodiment, the centrifugation device 120 is configured to be capable of performing the centrifugation on the sample at the second rotational speed that is greater or equal to 8000 rpm, and the controller is configured to: control the centrifugation device 120 to perform the centrifugation operation on the abnormal sample at the second rotational speed that is greater or equal to 8000 rpm, after the sample is determined to be abnormal based on the feedback information from the identification component 130 through the quality identification. Therefore, the automatic online processing for the abnormal samples can be performed through a higher rotational speed, and it is not required for the medical staff to manually carry the abnormal samples to the offline centrifuge for centrifugation. Accordingly, the process of handling abnormal samples can be effectively simplified, the processing time of the abnormal samples can be reduced, the time and effort of the medical staff consumed by abnormal samples can be greatly reduced, thereby reducing disruption to the work of medical staff by the abnormal samples.

As an implementation, the second rotational speed is greater than or equal to 10,000 rpm. The principle of setting the second rotation speed to 10,000 rpm can be referred to the first embodiment, and will not be elaborated in detail herein.

As an implementation, the sample being abnormal includes at least one of: the sample being a lipemic sample, presence of clot(s) in the sample, and presence of fibrin strand(s) in the sample. The introduction of the types of abnormal samples and the processing methods for the abnormal samples can be referred to the first embodiment, and will not be elaborated in detail herein.

As an implementation, the sample loading mechanism 110 configured to receive the sample container containing the sample in order to load the sample includes that: the sample loading mechanism 110 is configured to receive a sample container containing an uncentrifuged sample in order to load the uncentrifuged sample and receive a sample container containing a centrifuged sample in order to load the centrifuged sample. The centrifugation device 120 configured to perform the centrifugation operation on the sample includes that: the centrifugation device 120 is configured to at least perform the centrifugation operation on the uncentrifuged sample. The transfer device 140 configured to at least transfer the sample from the sample loading mechanism 110 to the centrifugation device 120 includes that: the transfer device 140 is configured to at least transfer the uncentrifuged sample from the sample loading mechanism 110 to the centrifugation device 120. The operations of controlling the identification component 130 to perform the quality identification on the sample after the centrifugation operation, determining, after the centrifugation operation, whether the sample is abnormal based on the feedback information from the identification component 130, and if the sample is determined to be abnormal, controlling the centrifugation device 120 to perform the centrifugation operation on the sample at the second rotational speed include: controlling the transfer device 140 to transfer the uncentrifuged sample from the sample loading mechanism 110 to the centrifugation device 120, controlling the centrifugation device 120 to perform the first centrifugation operation on the uncentrifuged sample at a first rotational speed, controlling the identification component 130 to perform the quality identification on the sample after the first centrifugation operation, determining, after the first centrifugation operation, whether the sample is abnormal based on the feedback information from the identification component 130, and if the sample is determined to be abnormal, controlling the centrifugation device 120 to perform the second centrifugation operation on the sample, which is abnormal after the first centrifugation operation, at the second rotational speed; and determining whether the centrifuged sample is abnormal based on the feedback information from the identification component 130, and when the centrifuged sample is determined to be abnormal, controlling the transfer device 140 to transfer the centrifuged sample to the centrifugation device 120, and controlling the centrifugation device 120 to perform the second centrifugation operation on the centrifuged sample at the second rotational speed. The flows and principles for processing the non-centrifuged sample and the centrifuged sample can be referred to the first embodiment, and will not be elaborated in detail herein.

As an implementation, the first rotational speed is less than or equal to 5000 rpm.

As an implementation, the first rotational speed is greater than or equal to 2000 rpm and less than or equal to 5000 rpm. The principle of setting the first rotation speed can be referred to the first embodiment, and will not be elaborated in detail herein.

As an implementation, the identification component 130 includes a first identification unit 131 and a second identification unit 132. The first identification unit 131 is configured to perform the quality identification on the sample after the centrifugation operation, and the second identification unit 132 is configured to identify the sample container outputted from the sample loading mechanism 110. The controller is further configured to: determine, based on feedback information from the second identification unit 132, whether the sample in the sample container outputted from the sample loading mechanism 110 is an uncentrifuged sample or a centrifuged sample and whether the centrifuged sample is abnormal. The operation of determining whether the centrifuged sample is abnormal based on the feedback information from the identification component 130 includes: determining whether the centrifuged sample is abnormal based on the feedback information from the second identification unit 132. The operation of determining, after the first centrifugation operation, whether the sample is abnormal based on the feedback information from the identification component 130 includes: determining, after the first centrifugation operation performed by the centrifugation device 120, whether the sample is abnormal based on feedback information from the first identification unit 131. The principle of configuring the identification component 130 can be referred to the first embodiment, and will not be elaborated in detail herein.

In addition to the above-described differences, other parts of the sample processing device 100, the sample analysis system 10, and the sample processing method provided in this embodiment can be referred to the first embodiment and the second embodiment, and will not be elaborated in detail herein.

### Fourth embodiment

The sample processing device 100, the sample analysis system 10, and the sample processing method provided in this embodiment differ from those of the first embodiment mainly in focus of the protection. Specifically, the first embodiment focuses on centrifuging the abnormal sample; and this embodiment focuses on centrifuging the emergency sample.

Specifically, the sample processing device 100 provided in the embodiment includes: a sample loading mechanism 110, a centrifugation device 120, a transfer device 140 and a controller. The sample loading mechanism 110 is configured to receive a first sample container containing a first sample in order to load the first sample, and receive a second sample container containing a second sample in order to load the second sample. The centrifugation device 120 includes a first centrifugation mechanism 121 and a second centrifugation mechanism 122. The first centrifugation mechanism 121 is configured to perform the centrifugation operation on the first sample, and the second centrifugation mechanism 122 is configured to perform the centrifugation operation on the second sample. A capacity of the first centrifugation mechanism 121 is greater than a capacity of the second centrifugation mechanism 122, and the first centrifugation mechanism 121 and the second centrifugation mechanism 122 are capable of operating independently. The capacity of the first centrifugation mechanism 121 is the maximum number of samples that the first centrifugation mechanism 121 is capable of holding in a single centrifugation operation, and the capacity of the second centrifugation mechanism 122 is the maximum number of samples that the second centrifugation mechanism 122 is capable of holding in a single centrifugation operation. The transfer device 140 is configured to at least transfer the first sample from the sample loading mechanism 110 to the first centrifugation mechanism 121 and transfer the second sample from the sample loading mechanism 110 to the second centrifugation mechanism 122. The controller is configured to: control the transfer device 140 to transfer the first sample from the sample loading mechanism 110 to the first centrifugation mechanism 121; control the first centrifugation mechanism 121 to perform centrifugation operation on the first sample; control the transfer device 140 to transfer the second sample from the sample loading mechanism 110 to the second centrifugation mechanism 122; and control the second centrifugation mechanism 122 to perform the centrifugation operation on the second sample. A priority for processing the second sample is higher than a priority for processing the first sample. According to this embodiment, the centrifugation device 120 is configured to include a first centrifugation mechanism 121 having a large capacity and a second centrifugation mechanism 122 having a small capacity, and the controller is configured to: control the transfer device 140 to transfer the first sample from the sample loading mechanism 110 to the first centrifugation mechanism 121 with the large capacity for centrifugation; and control transfer device 140 to transfer the second sample, whose priority is higher than the priority of the first sample, from the sampling loading mechanism 110 to the second centrifugation mechanism 122 with small capacity for centrifugation. In such a way, the second centrifugation mechanism 122 with the small capacity is added for performing the centrifugation operation on the second sample with the higher priority such as an emergency sample. Therefore, a rapid response to the samples with higher priority can be realized, and it is not required for the medical staff to manually carry the emergency samples to the offline centrifuge for centrifugation. Accordingly, the process of handling emergency samples can be effectively simplified, the time for processing the emergency samples can be reduced, and the time and effort of the medical staff consumed by the emergency samples can be greatly reduced. Given that the proportion of emergency samples is relatively small and the emergency samples are randomly occurred, the small-capacity centrifugation mechanism is employed to process the emergency samples, thereby ensuring rapid response for the emergency samples while contributing to reduction in both the size and cost of the sample processing device 100.

As an implementation, the second centrifugation mechanism 122 is capable of performing the centrifugation operation on the second sample at the first rotational speed and performing the centrifugation operation on the second sample at the second rotational speed. The first rotational speed is greater than or equal to 2000 rpm and less than or equal to 5000 rpm, and the second rotational speed is greater than or equal to 8000 rpm. In this implementation, the small-capacity centrifugation mechanism has centrifugation modes of a high rotational speed and a low rotational speed, so that the centrifugation mechanism used for centrifuging the emergency samples at a low speed can be reused for centrifuging the abnormal samples at a high speed.

As an implementation, the sample processing device 100 further includes an identification component 130. The identification component 130 is configured to at least perform quality identification on the second sample after the centrifugation operation. The operation of controlling the second centrifugation mechanism 122 to perform the centrifugation operation on the second sample includes: controlling the second centrifugation mechanism 122 to perform a first centrifugation operation on the second sample at the first rotational speed, controlling the identification component 130 to perform the quality identification on the second sample after the first centrifugation operation, and when the second sample is determined to be abnormal based on feedback information from the identification component 130, controlling the second centrifugation mechanism 122 to perform a second centrifugation operation on the second sample, which is abnormal after the first centrifugation operation, at the second rotational speed. The principle of configuring the identification component 130 may be referred to the first embodiment, and will not be elaborated in detail herein.

In addition to the above-described differences, other parts of the sample processing device 100, the sample analysis system 10, and the sample processing method provided in this embodiment can be referred to the first embodiment and the second embodiment, and will not be elaborated in detail herein.

### Fifth embodiment

The sample processing device 100, the sample analysis system 10, and the sample processing method provided in this embodiment differ from those of the first embodiment mainly in focus of protection. Specifically, the first embodiment focuses on low-speed centrifugation followed by high-speed centrifugation for the abnormal sample after quality identification; and this embodiment focuses on using separate centrifugation mechanisms for processing the normal sample and the abnormal sample, respectively.

Specifically, the sample processing device 100 provided in the embodiment includes: a sample loading mechanism 110, a centrifugation device 120, an identification component 130, a transfer device 140 and a controller. The sample loading mechanism 110 is configured to receive a sample container containing a sample in order to load the sample. The centrifugation device 120 includes a first centrifugation mechanism 121 and a second centrifugation mechanism 122. The first centrifugation mechanism 121 and the second centrifugation mechanism 122 are configured to perform centrifugation operations on the samples, respectively, and the first centrifugation mechanism 121 and the second centrifugation mechanism 122 are capable of operating independently. The identification component 130 is configured to at least perform quality identification on the sample after the centrifugation operation. The transfer device 140 is configured to at least transfer the sample from the sample loading mechanism 110 to the first centrifugation mechanism 121 or the second centrifugation mechanism 122. The controller is configured to: control the transfer device 140 to transfer the sample from the sample loading mechanism 110 to the first centrifugation mechanism 121; control the first centrifugation mechanism 121 to perform a first centrifugation operation on the sample; control the identification component 130 to perform the quality identification on the sample after the first centrifugation operation; determine, after the first centrifugation operation, whether the sample is abnormal based on feedback information from the identification component 130; and if the sample is determined to be abnormal, control the transfer device 140 to transfer the sample, which is abnormal after the first centrifugation operation, to the second centrifugation mechanism 122, and control the second centrifugation mechanism 122 to perform a second centrifugation operation on the sample which is abnormal after the first centrifugation operation. According to this embodiment, the centrifugation device 120 is configured to include a first centrifugation mechanism 121 and a second centrifugation mechanism 122, and the controller is configured to: control the transfer device 140 to transfer the sample from the sample loading mechanism 110 to the first centrifugation mechanism 121 for the first centrifugation operation firstly, and then, if, after the first centrifugation operation, the sample is determined to be abnormal based on the feedback information from the identification component 130 through quality identification, control the transfer device 140 to transfer the sample, which is abnormal after the first centrifugation operation, to the second centrifugation mechanism 122 for the second centrifugation operation. In such a way, the second centrifugation mechanism 122 is added for performing the centrifugation operation on the abnormal sample. Therefore, the automatic online processing for the abnormal samples can be performed, and it is not required for the medical staff to manually carry the abnormal samples to the offline centrifuge for centrifugation. Accordingly, the process of handling abnormal samples can be effectively simplified, the processing time of the abnormal samples can be reduced, the time and effort of the medical staff consumed by abnormal samples can be greatly reduced, thereby reducing disruption to the work of medical staff by the abnormal samples.

As an implementation, a capacity of the first centrifugation mechanism 121 is greater than a capacity of the second centrifugation mechanism 122. The principle of setting the capacity of the first centrifugation mechanism 121 and the capacity of the second centrifugation mechanism 122 can be referred to the first embodiment, and will not be elaborated in detail herein.

As an implementation, the operation of controlling the second centrifugation mechanism 122 to perform the second centrifugation operation on the sample, which is abnormal after the first centrifugation operation, includes: controlling the centrifugation device 120 to perform the second centrifugation operation on the sample, which is abnormal after the first centrifugation operation, at a second rotational speed. The second rotational speed is greater than or equal to 8000 rpm. The principle of setting the second rotation speed to 8000 rpm or higher can be referred to the first embodiment, and will not be elaborated in detail herein.

As an implementation, the sample being abnormal includes at least one of: the sample being a lipemic sample, presence of clot(s) in the sample, and presence of fibrin strand(s) in the sample. The types of abnormal samples and the processing methods for the abnormal samples can be referred to the first embodiment, and will not be elaborated in detail herein.

In addition to the above-described differences, other parts of the sample processing device 100, the sample analysis system 10, and the sample processing method provided in this embodiment can be referred to the first embodiment and the second embodiment, and will not be elaborated in detail herein.

The foregoing descriptions are merely preferred embodiments of the present disclosure and are not intended to limit the scope of the patent of the present disclosure. Any equivalent structural modifications made, under the inventive concept of the present disclosure, by using the contents of the specification and drawings, as well as any direct or indirect applications thereof in related technical fields, shall fall within the scope of patent protection of the present disclosure.

## Claims

1. A sample processing device, comprising:
a sample loading mechanism, configured to receive a sample container containing a sample in order to load the sample;
a centrifugation device, configured to perform a centrifugation operation on the sample;
a transfer device, configured to at least transfer the sample from the sample loading mechanism to the centrifugation device;
an identification component, configured to at least perform quality identification on the sample after the centrifugation operation; and
a controller, configured to: control the centrifugation device to perform a first centrifugation operation on the sample at a first rotational speed, control the identification component to perform the quality identification on the sample after the first centrifugation operation, determine, after the first centrifugation operation, whether the sample is abnormal based on feedback information from the identification component, and if the sample is determined to be abnormal, control the centrifugation device to perform a second centrifugation operation on the sample, which is abnormal after the first centrifugation operation, at a second rotational speed,
wherein the second rotational speed is greater than the first rotational speed.

2. The sample processing device of claim 1, wherein the centrifugation device comprises a first centrifugation mechanism and a second centrifugation mechanism, the first centrifugation mechanism and the second centrifugation mechanism are capable of operating independently; and
the controller is further configured to: control the transfer device to transfer the sample from the sample loading mechanism to the first centrifugation mechanism, control the first centrifugation mechanism to perform the first centrifugation operation on the sample at the first rotational speed, if, after the first centrifugation operation, the sample is determined to be abnormal based on the feedback information from the identification component, control the transfer device to transfer the sample, which is abnormal after the first centrifugation operation, to the second centrifugation mechanism, and control the second centrifugation mechanism to perform the second centrifugation operation on the sample, which is abnormal after the first centrifugation operation, at the second rotational speed.

3. The sample processing device of claim 2, wherein a capacity of the first centrifugation mechanism is greater than a capacity of the second centrifugation mechanism; and
the capacity of the first centrifugation mechanism is a maximum number of samples that the first centrifugation mechanism is capable of holding in a single centrifugation operation, and the capacity of the second centrifugation mechanism is a maximum number of samples that the second centrifugation mechanism is capable of holding in a single centrifugation operation.

4. The sample processing device of claim 2 or 3, wherein
the sample loading mechanism configured to receive a sample container containing a sample in order to load the sample comprises: the sample loading mechanism configured to receive a first sample container containing a first sample in order to load the first sample, and receive a second sample container containing a second sample in order to load the second sample;
the centrifugation device configured to perform a centrifugation operation on the sample comprises: the centrifugation device configured to perform the centrifugation operation on the first sample and perform the centrifugation operation on the second sample;
the identification component configured to perform quality identification on the sample after the centrifugation operation comprises: the identification component configured to perform the quality identification on the first sample after the centrifugation operation, and perform the quality identification on the second sample after the centrifugation operation;
the transfer device configured to at least transfer the sample from the sample loading mechanism to the centrifugation device comprises: the transfer device configured to transfer the first sample from the sample loading mechanism to the centrifugation device and transfer the second sample from the sample loading mechanism to the centrifugation device;
controlling the transfer device to transfer the sample to the first centrifugation mechanism, controlling the first centrifugation mechanism to perform the first centrifugation operation on the sample at the first rotational speed, if, after the first centrifugation operation, the sample is determined to be abnormal based on the feedback information from the identification component, controlling the transfer device to transfer the sample, which is abnormal after the first centrifugation operation, to the second centrifugation mechanism, and controlling the second centrifugation mechanism to perform the second centrifugation operation on the sample, which is abnormal after the first centrifugation operation, at the second rotational speed comprises: controlling the transfer device to transfer the first sample from the sample loading mechanism to the first centrifugation mechanism, controlling the first centrifugation mechanism to perform the first centrifugation operation on the first sample at the first rotational speed, if, after the first centrifugation operation, the first sample is determined to be abnormal based on the feedback information from the identification component, controlling the transfer device to transfer the first sample, which is abnormal after the first centrifugation operation, to the second centrifugation mechanism, and controlling the second centrifugation mechanism to perform the second centrifugation operation on the first sample, which is abnormal after the first centrifugation operation, at the second rotational speed; and
the controller is further configured to: control the transfer device to transfer the second sample from the sample loading mechanism to the second centrifugation mechanism, and control the second centrifugation mechanism to perform the centrifugation operation on the second sample,
wherein a priority for processing the second sample is higher than a priority for processing the first sample.

5. The sample processing device of claim 4, wherein controlling the transfer device to transfer the second sample from the sample loading mechanism to the second centrifugation mechanism, and controlling the second centrifugation mechanism to perform the centrifugation operation on the second sample comprises: controlling the transfer device to transfer the second sample from the sample loading mechanism to the second centrifugation mechanism, controlling the second centrifugation mechanism to perform the first centrifugation operation on the second sample at the first rotational speed, controlling the identification component to perform the quality identification on the second sample after the first centrifugation operation, and if, after the first centrifugation operation, the second sample is determined to be abnormal based on the feedback information from the identification component, controlling the second centrifugation mechanism to perform the second centrifugation operation on the second sample, which is abnormal after the first centrifugation operation, at the second rotational speed.

6. The sample processing device of claim 2 or 3, wherein the centrifugation device further comprises a third centrifugation mechanism, the first centrifugation mechanism, the second centrifugation mechanism and the third centrifugation mechanism are capable of operating independently;
the sample loading mechanism configured to receive a sample container containing a sample in order to load the sample, comprises: the sample loading mechanism configured to receive a first sample container containing a first sample in order to load the first sample, and receive a second sample container containing a second sample in order to load the second sample;
the centrifugation device configured to perform a centrifugation operation on the sample comprises: the centrifugation device configured to perform the centrifugation operation on the first sample and perform the centrifugation operation on the second sample;
the identification component configured to perform quality identification on the sample after the centrifugation operation comprises: the identification component configured to perform the quality identification on the first sample after the centrifugation operation, and perform the quality identification on the second sample after the centrifugation operation;
the transfer device configured to at least transfer the sample from the sample loading mechanism to the centrifugation device comprises: the transfer device configured to transfer the first sample from the sample loading mechanism to the centrifugation device and transfer the second sample from the sample loading mechanism to the centrifugation device;
controlling the transfer device to transfer the sample to the first centrifugation mechanism, controlling the first centrifugation mechanism to perform the first centrifugation operation on the sample at the first rotational speed, if, after the first centrifugation operation, the sample is determined to be abnormal based on the feedback information from the identification component, controlling the transfer device to transfer the sample, which is abnormal after the first centrifugation operation, to the second centrifugation mechanism, and controlling the second centrifugation mechanism to perform the second centrifugation operation on the sample, which is abnormal after the first centrifugation operation, at the second rotational speed, comprises: controlling the transfer device to transfer the first sample to the first centrifugation mechanism, controlling the first centrifugation mechanism to perform the first centrifugation operation on the first sample at the first rotational speed, if, after the first centrifugation operation, the first sample is determined to be abnormal based on the feedback information from the identification component, controlling the transfer device to transfer the first sample, which is abnormal after the first centrifugation operation, to the second centrifugation mechanism, and controlling the second centrifugation mechanism to perform the second centrifugation operation on the first sample, which is abnormal after the first centrifugation operation, at the second rotational speed; and
the controller is further configured to: control the transfer device to transfer the second sample from the sample loading mechanism to the third centrifugation mechanism, and control the third centrifugation mechanism to perform the centrifugation operation on the second sample,
wherein a priority for processing the second sample is higher than a priority for processing the first sample.

7. The sample processing device of claim 6, wherein
controlling the transfer device to transfer the second sample from the sample loading mechanism to the third centrifugation mechanism, and controlling the third centrifugation mechanism to perform the centrifugation operation on the second sample, comprises: controlling the transfer device to transfer the second sample from the sample loading mechanism to the third centrifugation mechanism, and controlling the third centrifugation mechanism to perform the first centrifugation operation on the second sample at the first rotational speed, and the controller is further configured to: control the identification component to perform the quality identification on the second sample after the first centrifugation operation, if, after the first centrifugation operation, the second sample is determined to be abnormal based on the feedback information from the identification component, control the transfer device to transfer the second sample, which is abnormal after the first centrifugation operation, to the second centrifugation mechanism, and control the second centrifugation mechanism to perform the second centrifugation operation on the second sample, which is abnormal after the first centrifugation operation, at the second rotational speed; or
controlling the transfer device to transfer the second sample from the sample loading mechanism to the third centrifugation mechanism, and controlling the third centrifugation mechanism to perform the centrifugation operation on the second sample, comprises: controlling the transfer device to transfer the second sample from the sample loading mechanism to the third centrifugation mechanism, controlling the third centrifugation mechanism to perform the first centrifugation operation on the second sample at the first rotational speed, controlling the identification component to perform the quality identification on the second sample after the first centrifugation operation, and if, after the first centrifugation operation, the second sample is determined to be abnormal based on the feedback information from the identification component, controlling the third centrifugation mechanism to perform the second centrifugation operation on the second sample, which is abnormal after the first centrifugation operation, at the second rotational speed.

8. The sample processing device of any one of claims 1 to 3, wherein the second rotational speed is greater than or equal to 8000 rpm.

9. The sample processing device of claim 8, wherein the second rotational speed is greater than or equal to 10000 rpm.

10. The sample processing device of claim 8, wherein the first rotational speed is less than or equal to 5000 rpm.

11. The sample processing device of claim 10, wherein the first rotational speed is greater than or equal to 2000 rpm.

12. The sample processing device of claim 2 or 3, wherein the transfer device comprises a first conveying track, a first transfer mechanism and a second transfer mechanism,
the first conveying track is configured to transfer, under control of the controller, the sample container outputted from the sample loading mechanism to the first centrifugation mechanism or the second centrifugation mechanism;
the first transfer mechanism is configured to transfer, under control of the controller, the sample container between the first conveying track and the first centrifugation mechanism; and
the second transfer mechanism is configured to transfer, under control of the controller, the sample container between the first conveying track and the second centrifugation mechanism,
wherein the first transfer mechanism and the second transfer mechanism are two mechanisms capable of operating independently, or the first transfer mechanism and the second transfer mechanism are a same mechanism.

13. The sample processing device of any one of claims 1 to 3, wherein the transfer device comprises a pipetting mechanism configured to aspirate and dispense the sample; and
the controller is further configured to: control the centrifugation device to perform the first centrifugation operation on the sample at the first rotational speed, control the identification component to perform the quality identification on the sample after the first centrifugation operation, determine whether the sample is abnormal based on the feedback information from the identification component, and if the sample is determined to be abnormal, control the pipetting mechanism to aspirate a supernatant from the sample after the first centrifugation operation and dispense the supernatant into an empty sample container, and control the centrifugation device to perform the second centrifugation operation on the supernatant dispensed by the pipetting mechanism at the second rotational speed.

14. The sample processing device of any one of claims 1 to 3, wherein the sample loading mechanism configured to receive a sample container containing a sample in order to load the sample, comprises: the sample loading mechanism configured to receive a sample container containing an uncentrifuged sample in order to load the uncentrifuged sample and receive a sample container containing a centrifuged sample in order to load the centrifuged sample;
the centrifugation device configured to perform a centrifugation operation on the sample comprises: the centrifugation device configured to at least perform the centrifugation operation on the uncentrifuged sample;
the transfer device configured to at least transfer the sample from the sample loading mechanism to the centrifugation device comprises: the transfer device configured to transfer the uncentrifuged sample from the sample loading mechanism to the centrifugation device;
controlling the centrifugation device to perform a first centrifugation operation on the sample at a first rotational speed, controlling the identification component to perform the quality identification on the sample after the first centrifugation operation, determining, after the first centrifugation operation, whether the sample is abnormal based on feedback information from the identification component, and if the sample is determined to be abnormal, controlling the centrifugation device to perform a second centrifugation operation on the sample, which is abnormal after the first centrifugation operation, at a second rotational speed, comprises: controlling the transfer device to transfer the uncentrifuged sample from the sample loading mechanism to the centrifugation device, controlling the centrifugation device to perform the first centrifugation operation on the uncentrifuged sample at the first rotational speed, controlling the identification component to perform the quality identification on the sample after the first centrifugation operation, determining, after the first centrifugation operation, whether the sample is abnormal based on the feedback information from the identification component, and if the sample is determined to be abnormal, controlling the centrifugation device to perform the second centrifugation operation on the sample, which is abnormal after the first centrifugation operation, at the second rotational speed; and
the controller is further configured to: determine whether the centrifuged sample is abnormal based on the feedback information from the identification component, and when the centrifuged sample is determined to be abnormal, control the transfer device to transfer the centrifuged sample to the centrifugation device, and control the centrifugation device to perform the second centrifugation operation on the centrifuged sample at the second rotational speed.

15. The sample processing device of claim 14, wherein the identification component comprises a first identification unit and a second identification unit, the first identification unit is configured to perform the quality identification on the sample after the centrifugation operation, and the second identification unit is configured to identify the sample container outputted from the sample loading mechanism;
the controller is further configured to: determine, based on feedback information from the second identification unit, whether the sample in the sample container outputted from the sample loading mechanism is an uncentrifuged sample or a centrifuged sample and whether the centrifuged sample is abnormal;
determining whether the centrifuged sample is abnormal based on the feedback information from the identification component comprises: determining whether the centrifuged sample is abnormal based on the feedback information from the second identification unit; and
determining, after the first centrifugation operation, whether the sample is abnormal based on the feedback information from the identification component comprises: determining, after the first centrifugation operation, whether the sample is abnormal based on feedback information from the first identification unit.

16. The sample processing device of any one of claims 1 to 3, further comprising: a human-machine interaction device configured to at least allow an operator to set a rotational speed for centrifugation and/or a centrifugation duration for the centrifugation device.

17. The sample processing device of any one of claims 1 to 3, wherein the sample being abnormal comprises at least one of: the sample being a lipemic sample, presence of clot(s) in the sample, and presence of fibrin strand(s) in the sample.

18. The sample processing device of any one of claims 1 to 3, further comprising a mixing mechanism, wherein the controller is further configured to: control the mixing mechanism to mix the sample after the sample is determined to be abnormal and before controlling the centrifugation device to perform the second centrifugation operation on the sample at the second rotational speed.

19. The sample processing device of claim 18, wherein the controller is further configured to: determine, based on an abnormal type of the sample, whether to control the mixing mechanism to mix the sample after the sample is determined to be abnormal and before controlling the centrifugation device to perform the second centrifugation operation on the sample at the second rotational speed.

20. The sample processing device of claim 19, wherein the controller is further configured to: when the abnormal type of the sample is presence of fibrin strand(s) in the sample or presence of clot(s) in the sample, control the mixing mechanism to mix the sample firstly, and then control the centrifugation device to perform the second centrifugation operation on the sample at the second rotational speed.

21. A sample processing device, comprising:
a sample loading mechanism, configured to receive a sample container containing a sample in order to load the sample;
a centrifugation device, configured to perform a centrifugation operation on the sample;
a transfer device, configured to at least transfer the sample from the sample loading mechanism to the centrifugation device;
an identification component, configured to at least perform quality identification on the sample after the centrifugation operation; and
a controller, configured to: control the identification component to perform the quality identification on the sample after the centrifugation operation, determine, after the centrifugation operation, whether the sample is abnormal based on feedback information from the identification component, and if the sample is determined to be abnormal, control the centrifugation device to perform the centrifugation operation on the sample at a second rotational speed,
wherein the second rotational speed is greater than or equal to 8000 rpm.

22. The sample processing device of claim 21, wherein the second rotational speed is greater than or equal to 10000 rpm.

23. The sample processing device of claim 21 or 22, wherein the sample being abnormal comprises at least one of: the sample being a lipemic sample, presence of clot(s) in the sample, and presence of fibrin strand(s) in the sample.

24. The sample processing device of claim 21 or 22, wherein
the sample loading mechanism configured to receive a sample container containing a sample in order to load the sample comprises: the sample loading mechanism configured to receive a sample container containing an uncentrifuged sample to load the uncentrifuged sample and receive a sample container containing a centrifuged sample to load the centrifuged sample;
the centrifugation device configured to perform a centrifugation operation on the sample comprises: the centrifugation device configured to at least perform the centrifugation operation on the uncentrifuged sample;
the identification component configured to perform quality identification on the sample after the centrifugation operation comprises: the identification component configured to perform the quality identification on the uncentrifuged sample after the centrifugation operation, and perform the quality identification on the centrifuged sample after the centrifugation operation;
the transfer device configured to at least transfer the sample from the sample loading mechanism to the centrifugation device comprises: the transfer device configured to at least transfer the uncentrifuged sample from the sample loading mechanism to the centrifugation device;
controlling the identification component to perform the quality identification on the sample after the centrifugation operation, determining, after the centrifugation operation, whether the sample is abnormal based on feedback information from the identification component, and if the sample is determined to be abnormal, controlling the centrifugation device to perform the centrifugation operation on the sample at a second rotational speed, comprises:
controlling the transfer device to transfer the uncentrifuged sample from the sample loading mechanism to the centrifugation device, controlling the centrifugation device to perform a first centrifugation operation on the uncentrifuged sample at a first rotational speed, controlling the identification component to perform the quality identification on the sample after the first centrifugation operation, determining, after the first centrifugation operation, whether the sample is abnormal based on the feedback information from the identification component, and if the sample is determined to be abnormal, controlling the centrifugation device to perform a second centrifugation operation on the sample, which is abnormal after the first centrifugation operation, at the second rotational speed; and
determining whether the centrifuged sample is abnormal based on the feedback information from the identification component, and when the centrifuged sample is determined to be abnormal, controlling the transfer device to transfer the centrifuged sample to the centrifugation device, and controlling the centrifugation device to perform the second centrifugation operation on the centrifuged sample at the second rotational speed,
wherein the first rotational speed is greater than or equal to 2000 rpm and less than or equal to 5000 rpm.

25. The sample processing device of claim 24, wherein the identification component comprises a first identification unit and a second identification unit, the first identification unit is configured to perform the quality identification on the sample after the centrifugation operation, and the second identification unit is configured to identify the sample container outputted from the sample loading mechanism;
the controller is further configured to: determine, based on feedback information from the second identification unit, whether the sample in the sample container outputted from the sample loading mechanism is the uncentrifuged sample or the centrifuged sample and whether the centrifuged sample is abnormal;
determining whether the centrifuged sample is abnormal based on the feedback information from the identification component comprises: determining whether the centrifuged sample is abnormal based on the feedback information from the second identification unit; and
determining, after the first centrifugation operation, whether the sample is abnormal based on the feedback information from the identification component comprises: determining, after the first centrifugation operation performed by the centrifugation device, whether the sample is abnormal based on feedback information from the first identification unit.

26. A sample processing device, comprising:
a sample loading mechanism, configured to receive a first sample container containing a first sample to load the first sample, and receive a second sample container containing a second sample to load the second sample;
a centrifugation device, comprising a first centrifugation mechanism configured to perform a centrifugation operation on the first sample and a second centrifugation mechanism configured to perform a centrifugation operation on the second sample, wherein a capacity of the first centrifugation mechanism is greater than a capacity of the second centrifugation mechanism, the first centrifugation mechanism and the second centrifugation mechanism are capable of operating independently, the capacity of the first centrifugation mechanism is a maximum number of samples that the first centrifugation mechanism is capable of holding in a single centrifugation operation, and the capacity of the second centrifugation mechanism is a maximum number of samples that the second centrifugation mechanism is capable of holding in a single centrifugation operation;
a transfer device, configured to at least transfer the first sample from the sample loading mechanism to the first centrifugation mechanism and transfer the second sample from the sample loading mechanism to the second centrifugation mechanism; and
a controller, configured to: control the transfer device to transfer the first sample from the sample loading mechanism to the first centrifugation mechanism, control the first centrifugation mechanism to perform the centrifugation operation on the first sample, control the transfer device to transfer the second sample from the sample loading mechanism to the second centrifugation mechanism, and control the second centrifugation mechanism to perform the centrifugation operation on the second sample,
wherein a priority for processing the second sample is higher than a priority for processing the first sample.

27. The sample processing device of claim 26, wherein the second centrifugation mechanism is capable of performing the centrifugation operation on the second sample at a first rotational speed and a second rotational speed; and
wherein the first rotational speed is greater than or equal to 2000 rpm and less than or equal to 5000 rpm, and the second rotational speed is greater than or equal to 8000 rpm.

28. The sample processing device of claim 27, further comprising an identification component, configured to at least perform quality identification on the second sample after the centrifugation operation; and
controlling the second centrifugation mechanism to perform the centrifugation operation on the second sample comprises: controlling the second centrifugation mechanism to perform a first centrifugation operation on the second sample at the first rotational speed, controlling the identification component to perform the quality identification on the second sample after the first centrifugation operation, and when the second sample is determined to be abnormal based on feedback information from the identification component, controlling the second centrifugation mechanism to perform a second centrifugation operation on the second sample, which is abnormal after the first centrifugation operation, at the second rotational speed.

29. A sample processing device, comprising:
a sample loading mechanism, configured to receive a sample container containing a sample in order to load the sample;
a centrifugation device, comprising a first centrifugation mechanism and a second centrifugation mechanism, wherein the first centrifugation mechanism and the second centrifugation mechanism are configured to perform centrifugation operations on the sample, respectively, and the first centrifugation mechanism and the second centrifugation mechanism are capable of operating independently;
a transfer device, configured to at least transfer the sample from the sample loading mechanism to the first centrifugation mechanism or the second centrifugation mechanism;
an identification component, configured to at least perform quality identification on the sample after the centrifugation operation; and
a controller, configured to: control the transfer device to transfer the sample from the sample loading mechanism to the first centrifugation mechanism, control the first centrifugation mechanism to perform a first centrifugation operation on the sample, control the identification component to perform the quality identification on the sample after the first centrifugation operation, determine, after the first centrifugation operation, whether the sample is abnormal based on feedback information from the identification component, and if the sample is determined to be abnormal, control the transfer device to transfer the sample, which is abnormal after the first centrifugation operation, to the second centrifugation mechanism, and control the second centrifugation mechanism to perform a second centrifugation operation on the sample which is abnormal after the first centrifugation operation.

30. The sample processing device of claim 29, wherein a capacity of the first centrifugation mechanism is greater than a capacity of the second centrifugation mechanism, the capacity of the first centrifugation mechanism is a maximum number of samples that the first centrifugation mechanism is capable of holding in a single centrifugation operation, and the capacity of the second centrifugation mechanism is a maximum number of samples that the second centrifugation mechanism is capable of holding in a single centrifugation operation.

31. The sample processing device of claim 29, wherein controlling the second centrifugation mechanism to perform a second centrifugation operation on the sample which is abnormal after the first centrifugation operation, comprises: controlling the centrifugation device to perform the second centrifugation operation on the sample, which is abnormal after the first centrifugation operation, at a second rotational speed,
wherein the second rotational speed is greater than or equal to 8000 rpm.

32. The sample processing device of any one of claims 29 to 31, wherein the sample being abnormal comprises at least one of: the sample being a lipemic sample, presence of clot(s) in the sample, and presence of fibrin strand(s) in the sample.

33. A sample analysis system, comprising:
a sample processing device of any one of claims 1 to 32;
at least one sample analyzer, configured to perform at least one sample testing item on a sample; and
a transport device, configured to transport the sample from the sample processing device to the sample analyzer for aspiration of the sample by the sample analyzer.
